# EUROPEAN PATENT APPLICATION

(11) **EP 2 874 418 A1**
(43) Date of publication of application: **20.05.2015**
(21) Application number: 12882410.9
(22) Date of filing: 31.07.2012
(51) Int. Cl.: H04W 4/16

(54) **ADVERTISEMENT INSERTION METHOD, DEVICE, AND SYSTEM**

(71) Applicant: Huawei Technologies Co., Ltd., Longgang District Shenzhen, Guangdong 518129 (CN)
(72) Inventor: XIONG, Chunshan, Shenzhen Guangdong 518129 (CN)
(74) Representative: Körber, Martin Hans
(86) International application number: PCT/CN2012/079431
(87) International publication number: WO 2014/019140

(57) **Abstract**

Embodiments of the present invention provide an advertisement insertion method, device, and system, and relate to the field of mobile communications. The method includes: before a voice call or a video call is connected, sending, by a media gateway or an advertisement storage, an advertisement to a terminal; and playing, by the terminal, the advertisement, so as to implement advertisement insertion. In the present invention, after a call is requested and before the call is connected, an advertisement is sent to a terminal by a media gateway by using a transmission resource of a video call or by an advertisement storage by using a packet switched network, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

## Description

### TECHNICAL FIELD

The present invention relates to the field of communications, and in particular, to an advertisement insertion method, device, and system.

### BACKGROUND

With the development of wireless communication technologies, mobile terminals are used more frequently in people's daily lives, and functions of the mobile terminals are not only used for a voice call or a video call between two parties, but also often used to browse the Internet, send an email, read information, and the like.

When a user accesses the Internet through a mobile terminal, a server in the Internet generally inserts advertisement content in data accessed by the user. Specifically, an existing advertisement insertion method is as follows: First, a mobile terminal initiates, through a wireless network, a data acquisition request to a specific server located in the Internet, where requested data may be a webpage, a picture, a video, an email, and the like; next, the server analyzes the data requested by the mobile terminal, and determines, according to an analysis result, a matched advertisement to be inserted; finally, the server inserts the advertisement in the data requested by the mobile terminal, and then feeds back the data to the mobile terminal.

In the existing advertisement insertion method, advertisement insertion can be implemented only when the mobile terminal requests data in the specific server in the Internet. When the mobile terminal requests data in another server in the Internet or does not access the Internet, the advertisement insertion cannot be implemented on the mobile terminal.

### SUMMARY

To solve a problem that advertisement insertion can be implemented only when a mobile terminal requests data in a specific server in the Internet, embodiments of the present invention provide an advertisement insertion method, device, and system. Technical solutions are as follows:
In a first aspect, an advertisement insertion method is provided and includes:
   receiving a call request from a user, where the call request is a voice call request or a video call request;
   if the call request is the voice call request, converting the voice call request into a video call request;
   sending the video call request to a call control device, so that the call control device instructs a media gateway to allocate a transmission resource for the video call; and
   before the video call is connected, receiving an advertisement by using the transmission resource and playing the advertisement.

In a second aspect, an advertisement insertion method is provided and includes:
receiving a video call request sent by a calling side terminal, or sending a video call request to a called side terminal;
sending a resource allocation instruction to a media gateway, so that the media gateway allocates a transmission resource for the video call according to the resource allocation instruction, and before the video call is connected, sending an advertisement to the terminal by using the transmission resource, where
the video call request is a common video call request, or a video call request converted from a voice call request.

In a third aspect, an advertisement insertion method is provided and includes:
receiving a resource allocation instruction sent by a call control device, where the resource allocation instruction is sent by the call control device after the call control device receives a video call request sent by a calling side terminal, or sends a video call request to a called side terminal; and
allocating a transmission resource for the video call according to the resource allocation instruction, and before the video call is connected, sending an advertisement to the terminal by using the transmission resource, where
the video call request is a common video call request, or a video call request converted from a voice call request.

In a fourth aspect, an advertisement insertion method is provided and includes:
receiving a call request sent by a calling side terminal, or sending a call request to a called side terminal; and
after the call is connected, sending, to an advertisement storage, a first instruction that carries identification information of the terminal, so as to instruct the advertisement storage to send an advertisement to the terminal according to the identification information.

In a fifth aspect, an advertisement insertion method is provided and includes:
sending a call request to a call control device, or receiving a call request sent by a call control device; and
before the call is connected, playing an advertisement that is in advance acquired from an advertisement storage and stored in a terminal, or acquiring an advertisement from the advertisement storage and playing the advertisement in real time.

In a sixth aspect, an advertisement insertion method is provided and includes:
receiving a first instruction sent by a call control device or a terminal, where the first instruction is an instruction that carries identification information of the terminal and is sent by the call control device or the terminal after the call control device or the terminal sends or receives a call request involving the terminal and before the call is connected; and
sending an advertisement to the terminal according to the identification information.

In a seventh aspect, a terminal is provided and includes:
a request receiving module, configured to receive a call request from a user, where the call request is a voice call request or a video call request;
a request converting module, configured to, if the call request received or sent by the request receiving module is the voice call request, convert the voice call request into a video call request;
a request sending module, configured to send, to a call control device, the video call request received by the request receiving module or converted by the request converting module, so that the call control device instructs a media gateway to allocate a transmission resource for the video call; and
an advertisement playing module, configured to, before a video call corresponding to the video call request sent by the request sending module is connected, receive an advertisement by using the transmission resource and play the advertisement.

In an eighth aspect, a call control device is provided and includes:
a request processing module, configured to receive a video call request sent by a calling side terminal, or send a video call request to a called side terminal; and
an instruction sending module, configured to send a resource allocation instruction to a media gateway, so that the media gateway allocates, according to the resource allocation instruction, a transmission resource for a video call corresponding to the video call request received or sent by the request processing module, and before the video call is connected, send an advertisement to the terminal by using the transmission resource, where
the video call request is a common video call request, or a video call request converted from a voice call request.

In a ninth aspect, a media gateway is provided and includes:
an instruction receiving module, configured to receive a resource allocation instruction sent by a call control device, where the resource allocation instruction is sent by the call control device after the call control device receives a video call request sent by a calling side terminal, or sends a video call request to a called side terminal; and
an advertisement sending module, configured to allocate a transmission resource for the video call according to the resource allocation instruction received by the instruction receiving module, and before the video call is connected, send an advertisement to the terminal by using the transmission resource, where
the video call request is a common video call request, or a video call request converted from a voice call request.

In a tenth aspect, a call control device is provided and includes:
a request processing module, configured to receive a call request sent by a calling side terminal, or send a call request to a called side terminal; and
a first instruction sending module, configured to, before a call corresponding to the call request received or sent by the request processing module is connected, send, to an advertisement storage, a first instruction that carries identification information of the terminal, so as to instruct the advertisement storage to send an advertisement to the terminal according to the identification information.

In an eleventh aspect, a terminal is provided and includes:
a call processing module, configured to send a call request to a call control device, or receive a call request sent by a call control device; and
an advertisement playing module, configured to, before a call corresponding to the call request received or sent by the call processing module is connected, play an advertisement that is in advance acquired from an advertisement storage and stored in the terminal, or acquire an advertisement from the advertisement storage and play the advertisement in real time.

In a twelfth aspect, an advertisement storage is provided and includes:
a first instruction receiving module, configured to receive a first instruction sent by a call control device or a terminal, where the first instruction is an instruction that carries identification information of the terminal and is sent by the call control device or the terminal after the call control device or the terminal sends or receives a call request involving the terminal and before the call is connected; and
an advertisement sending module, configured to send an advertisement to the terminal according to the identification information received by the first instruction receiving module.

In a thirteenth aspect, an advertisement insertion system is provided and includes the terminal in the seventh aspect, the call control device in the eighth aspect, and the media gateway in the ninth aspect.

In a fourteenth aspect, an advertisement insertion system is provided and includes the call control device in the eighth aspect and the media gateway in the ninth aspect.

In a fifteenth aspect, an advertisement insertion system is provided and includes the call control device in the tenth aspect and the advertisement storage in the twelfth aspect.

In a sixteenth aspect, an advertisement insertion system is provided and includes the terminal in the eleventh aspect and the advertisement storage in the twelfth aspect.

After a call is requested and before the call is connected, an advertisement is sent to a terminal by a media gateway by using a transmission resource of a video call or by an advertisement storage by using a packet switched network, thereby solving a problem in the prior art that advertisement insertion can be implemented only when a mobile terminal requests data in a specific server in the Internet, and achieving an effect that advertisement insertion can also be implemented when a terminal does not access data in a specific server in the Internet, but only uses a voice call service or a video call service.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a schematic structural diagram of an advertisement insertion system according to an embodiment of the present invention;
FIG. 2 is a method flowchart of an advertisement storage method according to an embodiment of the present invention;
FIG. 3 is a method flowchart of an advertisement insertion method according to an embodiment of the present invention;
FIG. 4 is a method flowchart of an advertisement insertion method according to another embodiment of the present invention;
FIG. 5 is a method flowchart of an advertisement insertion method according to another embodiment of the present invention;
FIG. 6 is a method flowchart of an advertisement insertion method according to another embodiment of the present invention;
FIG. 7 is a method flowchart of an advertisement insertion method according to another embodiment of the present invention;
FIG. 8 is a method flowchart of an advertisement insertion method according to another embodiment of the present invention;
FIG. 9 is a method flowchart of an advertisement insertion method according to another embodiment of the present invention;
FIG. 10 is a method flowchart of an advertisement insertion method according to another embodiment of the present invention;
FIG. 11 is a method flowchart of an advertisement insertion method according to another embodiment of the present invention;
FIG. 12 is a method flowchart of an advertisement insertion method according to another embodiment of the present invention;
FIG. 13 is a method flowchart of an advertisement insertion method according to another embodiment of the present invention;
FIG. 14 is a method flowchart of an advertisement insertion method according to another embodiment of the present invention;
FIG. 15 is a structural block diagram of a terminal according to an embodiment of the present invention;
FIG. 16 is a structural block diagram of a terminal according to another embodiment of the present invention;
FIG. 17 is a structural block diagram of a call control device according to an embodiment of the present invention;
FIG. 18a and FIG. 18b are structural block diagrams of a call control device according to another embodiment of the present invention;
FIG. 19 is a structural block diagram of a media gateway according to an embodiment of the present invention;
FIG. 20a to FIG. 20d are structural block diagrams of a media gateway according to another embodiment of the present invention;
FIG. 21 is a structural block diagram of a call control device according to an embodiment of the present invention;
FIG. 22 is a structural block diagram of a call control device according to another embodiment of the present invention;
FIG. 23 is a structural block diagram of a terminal according to an embodiment of the present invention;
FIG. 24a and FIG. 24b are structural block diagrams of a terminal according to another embodiment of the present invention;
FIG. 25a and FIG. 25b are structural block diagrams of a terminal according to still another embodiment of the present invention;
FIG. 26 is a structural block diagram of an advertisement storage according to an embodiment of the present invention;
FIG. 27 is a structural block diagram of an advertisement storage according to another embodiment of the present invention;
FIG. 28 is a structural block diagram of an advertisement storage according to still another embodiment of the present invention;
FIG. 29 is a structural block diagram of an advertisement insertion system according to an embodiment of the present invention;
FIG. 30 is a structural block diagram of an advertisement insertion system according to another embodiment of the present invention;
FIG. 31 is a structural block diagram of an advertisement insertion system according to still another embodiment of the present invention;
FIG. 32 is a structural block diagram of an advertisement insertion system according to yet another embodiment of the present invention; and
FIG. 33 is a structural block diagram of an advertisement insertion system according to yet another embodiment of the present invention.

### DESCRIPTION OF EMBODIMENTS

To make the objectives, technical solutions, and advantages of the present invention more comprehensible, the following further describes the present invention in detail with reference to the accompanying drawings. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

It should be understood first that, in a 3GPP (3rd Generation Partnership Project, 3rd generation partnership project) wireless system, there are mainly two manners for implementing a call service: The first one is implementing the call service through a CS domain (Circuit Switched Domain, circuit switched domain); and the second one is implementing the call service through an IMS (IP Multimedia Subsystem, IP multimedia subsystem). The call service includes a voice call service and a video call service. Herein, description is also given based on the two different implementation manners.

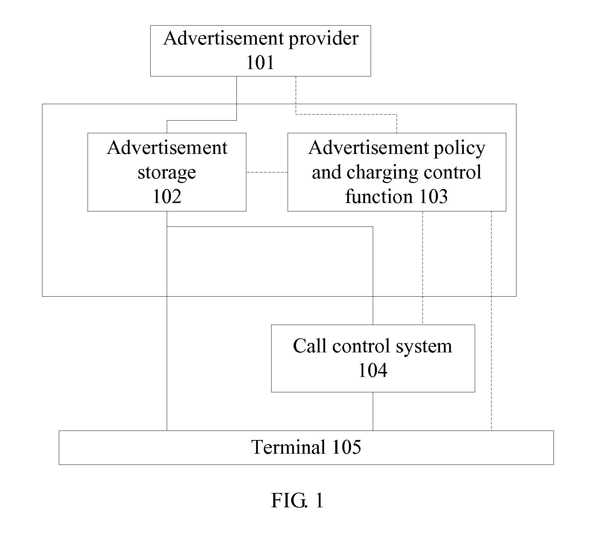

Referring to FIG. 1, a schematic structural diagram of an advertisement insertion system according to an embodiment of the present invention is shown. The advertisement insertion system includes an advertisement providing device 101, an advertisement storage 102, an advertisement policy and charging control function 103, a call control system 104, and a terminal 105.

The advertisement providing device 101 may specifically be a personal computer or a server in a place where an advertising company or enterprise is located, and is connected to each of the advertisement policy and charging control function 103 and the advertisement storage 102 through a wireless or wired network.

The advertisement storage 102 may specifically be an independently disposed server, and is connected to each of the advertisement provider 101, the advertisement policy and charging control function 103, the call control system 104, and the terminal 105 through a wireless or wired network.

The advertisement policy and charging control function 103 is also called APCF (Advertisement Policy and Charging Control Function, advertisement policy and charging control function), may specifically be an independently disposed server, and is connected to each of the advertisement provider 101, the advertisement storage 102, the call control system 104, and the terminal 105 through a wireless or wired network.

The call control system 104 may be an MSC (Mobile Switching Cente, mobile switching center) or an IMS, and is connected to each of the advertisement storage 102, the advertisement policy and charging control function 103, and the terminal 105 through a wireless or wired network. The call control system generally includes a call control device and a media gateway that are respectively configured to implement control and bearing. When the call control system 104 is the MSC, the call control device may be an MSC Server, and the media gateway may be an MGW (Media Gateway, media gateway). When the call control system 104 is the IMS, the call control device may be a CSCF (Call Session Control Function, call session control function), and the media gateway may be an IMS MGW (IP Multimedia Subsystem Media Gateway, IP multimedia subsystem media gateway).

The terminal 105 may be a UE (Use Equipment, user equipment) or another device that can implement a voice call or a video call, for example, a fixed-line phone that supports a video call function, and is connected to each of the advertisement storage 102, the advertisement policy and charging control function 103, and the call control system 104 through a wireless network.

For more detailed description of the advertisement insertion system and the devices in the system, continue to refer to the following embodiments.

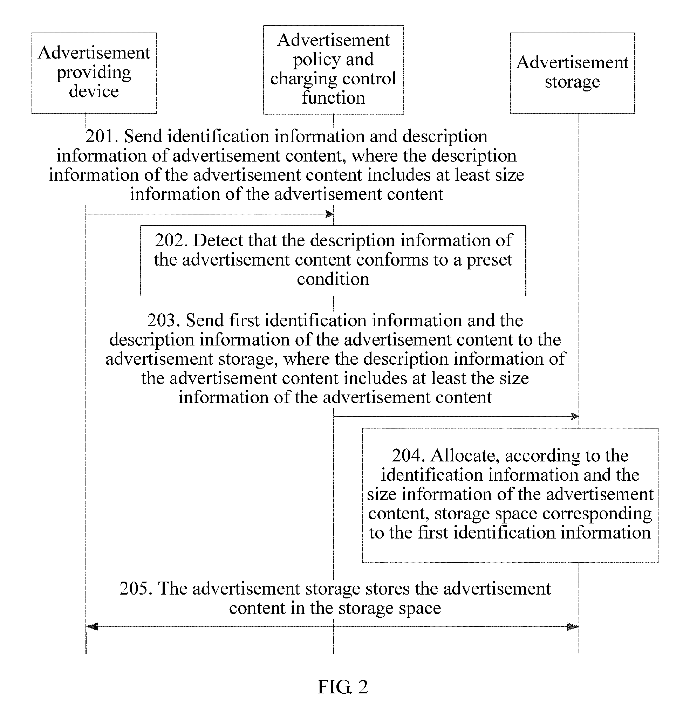

Referring to FIG. 2, a method flowchart of an advertisement storage method according to an embodiment of the present invention is shown. This embodiment is described by using an example that the advertisement storage method is applied in the advertisement insertion system shown in FIG. 1, and the advertisement storage method includes the following steps.

201: An advertisement providing device sends identification information and description information of advertisement content to an advertisement policy and charging control function, where the description information of the advertisement content includes at least size information of the advertisement content.

The advertisement providing device may send the identification information and the description information of the advertisement content to the advertisement policy and charging control function, where the description information of the advertisement content includes at least the size information of the advertisement content. Specifically, the advertisement providing device may simultaneously send the identification information and the description information of the advertisement content to the advertisement policy and charging control function; and may also separately send the identification information and the description information of the advertisement content to the advertisement policy and charging control function. This embodiment is described by using an example that the identification information and the description information of the advertisement content are simultaneously sent to the advertisement policy and charging control function.

When the advertisement providing device separately sends the identification information and the description information of the advertisement content to the advertisement policy and charging control function, this step may include the following substeps: First, the advertisement providing device sends the identification information of the advertisement content to the advertisement policy and charging control function; second, the advertisement policy and charging control function receives the identification information of the advertisement content; third, the advertisement policy sends a description information acquisition request to the advertisement providing device according to the identification information of the advertisement content, where the description information acquisition request carries the identification information of the advertisement content; fourth, after receiving the description information acquisition request, the advertisement providing device sends corresponding description information of the advertisement content to the advertisement policy and charging control function according to the identification information of the advertisement content carried in the description information acquisition request; and fifth, the advertisement policy and charging control function receives the description information of the advertisement content sent by the advertisement providing device.

In this embodiment, the identification information of the advertisement content may be a URL (Universal Resource Locator, universal resource locator) which is in the advertisement providing device and corresponds to the advertisement content. The description information of the advertisement content may not only include the size information of the advertisement content, but also include one or more items of type information, resolution information, encoding information, a language type, and placement requirement information of the advertisement content. The type information of the advertisement content may include one or more items of a text, an image, an audio, and a video. The size information of the advertisement content may be a data volume indicated by using MB, KB, and the like. The resolution information of the advertisement content may be a resolution corresponding to an image or a video. The encoding information of the advertisement content may be an encoding format corresponding to an image or a video. The language type of the advertisement content may include one or more items of Chinese, English, French, and Japanese. The placement requirement information of the advertisement content may include one or more items of a matching keyword, a matching trigger event, a placement area, placement object information, and a placement time segment.

202: The advertisement policy and charging control function determines that the description information of the advertisement content conforms to a preset condition.

After receiving the identification information and the description information of the advertisement content, the advertisement policy and charging control function may determine whether the description information of the advertisement content conforms to the preset condition. Because information included in the description information of the advertisement content may be a combination of several items of information, correspondingly, the determining, by the advertisement policy and charging control function, that the description information of the advertisement content conforms to a preset condition includes one or more of the following cases:
determining that a type in the type information of the advertisement content conforms to a preset type, where the preset type includes any one or more of a text, a picture, an audio, and a video;
determining that a resolution in the resolution information of the advertisement content is smaller than or equal to a preset resolution, where, for example, the preset resolution is 960*640 pixels, 320*240 pixels, or the like;
determining that an encoding rule in the encoding information of the advertisement content conforms to a preset encoding rule, where, for example, the preset encoding rule is a text encoding rule Unicode, or video encoding H.264, or the like;
determining whether a value in the size information of the advertisement content is smaller than a preset threshold, where, for example, the preset threshold is 20MB;
determining that a language in the language information of the advertisement content conforms to a preset language, where, for example, the preset language is English or Chinese; and
determining that a placement requirement in the placement requirement information of the advertisement content conforms to a preset placement requirement, where, for example, the preset placement requirement includes a matching keyword "shampoo", a placement area "Beijing", placement object information "female", and a placement time segment "18:00 - 24:00 every day".

203: The advertisement policy and charging control function sends the identification information and the description information of the advertisement content to an advertisement storage, where the description information of the advertisement content includes at least the size information of the advertisement content.

The advertisement policy and charging control function sends the identification information and the description information of the advertisement content to the advertisement storage, so as to instruct the advertisement storage to allocate corresponding storage space for the advertisement content.

204: The advertisement storage allocates corresponding storage space according to the identification information and the size information of the advertisement content.

The advertisement storage may receive the identification information and the description information of the advertisement content that are sent by the advertisement policy and charging control function. Next, the advertisement storage allocates, according to the size information of the advertisement content, corresponding storage space for the advertisement content identified by the identification information. Generally speaking, a size of the storage space allocated by the advertisement storage may be larger than or equal to a size indicated by the size information of the advertisement content. For example, the size of the advertisement content is 20MB, and accordingly, the size of the storage space allocated by the advertisement storage may be 20MB+100KB, where the 100KB may be used for storing the identification information and the description information of the advertisement content. For another example, the size of the advertisement content is 10MB, and a size of the description information of the advertisement content is 102KB, and accordingly, the size of the storage space allocated by the advertisement storage may be 10MB+102KB.

205: The advertisement storage stores the advertisement content in the storage space.

After allocating the storage space, the advertisement storage may store, in the storage space, the advertisement content provided by the advertisement providing device. According to different storage manners, there are specifically the following two cases.

First, the advertisement storage requests the advertisement providing device for the advertisement content according to the identification information of the advertisement content, and the advertisement storage receives the advertisement content and stores the advertisement content in the storage space.

Second, the advertisement storage generates identification information of the storage space and provides the identification information to the advertisement providing device, so that the advertisement providing device pushes the advertisement content to the storage space according to the identification information of the storage space; and the advertisement storage receives and stores the advertisement content.

In conclusion, in the advertisement storage method provided in this embodiment, advertisement content is automatically stored in storage space through coordination between an advertisement policy and charging control function and an advertisement storage, thereby solving a problem that a long time is consumed because an advertisement provider generally needs to provide advertisement content to a service provider through an email or an instant messaging tool or in another manner, and achieving an effect that the advertisement content provided by the advertisement provider can be selectively received and stored.

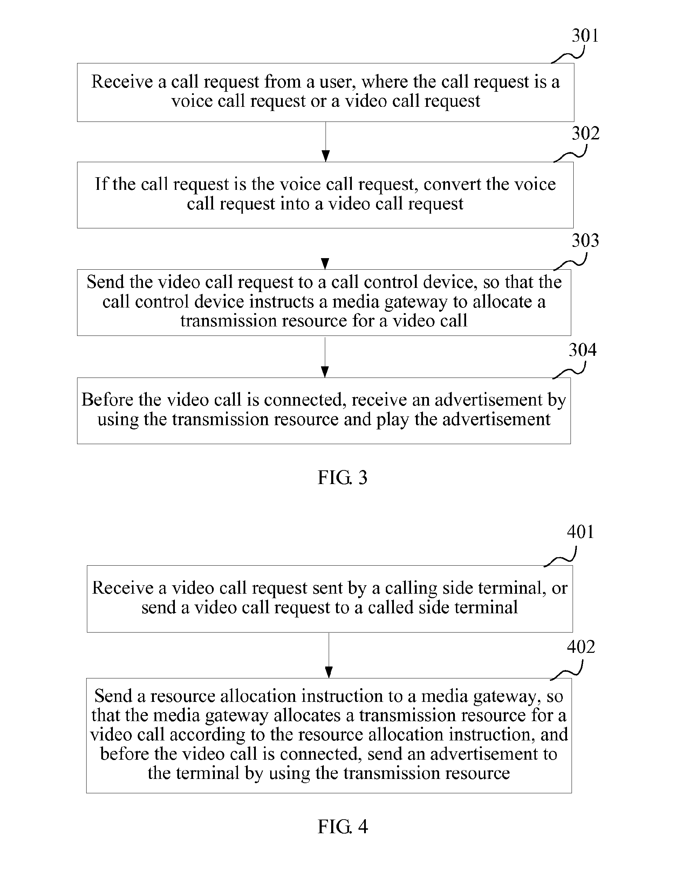

Referring to FIG. 3, a method flowchart of an advertisement insertion method according to an embodiment of the present invention is shown. This embodiment is described by using an example that the advertisement insertion method is applied in the terminal 105 shown in FIG. 1, and the advertisement insertion method includes the following steps.

301: Receive a call request from a user, where the call request is a voice call request or a video call request.

The terminal may receive the call request from the user, for example, the user may initiate the call request by using a keypad or a dial program on the terminal. The call request may be a voice call request or a video call request, and the call request generally carries a number of a called device, where the called device may be a mobile phone or a fixed-line phone.

302: If the call request is the voice call request, convert the voice call request into a video call request.

If the call request received by the terminal is the voice call request, the terminal may automatically convert the voice call request into a video call request, so as to facilitate subsequent advertisement insertion by using a transmission resource in a video call.

303: Send the video call request to a call control device, so that the call control device instructs a media gateway to allocate a transmission resource for a video call.

No matter after the terminal directly receives the video call request of the user, or after the terminal converts the voice call request of the user into the video call request, the terminal sends the video call request to the call control device, so that the call control device sets up the video call. A process of setting up the video call includes that the call control device instructs the media gateway to allocate the transmission resource for the video call.

304: Before the video call is connected, receive an advertisement by using the transmission resource and play the advertisement.

After the media gateway allocates the transmission resource for the video call, and before the video call is connected, the terminal may receive, by using the transmission resource allocated by the media gateway, the advertisement sent by the media gateway to the terminal and play the advertisement.

In conclusion, in the advertisement insertion method provided in this embodiment, after a call is requested and before the call is connected, a media gateway sends an advertisement to a terminal by using a transmission resource of a video call, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

Referring to FIG. 4, a method flowchart of an advertisement insertion method according to another embodiment of the present invention is shown. This embodiment is described by using an example that the advertisement insertion method is applied in the call control device in the call control system 104 shown in FIG. 1, and the call control device may be an MSC Server or a CSCF. The advertisement insertion method includes the following steps.

401: Receive a video call request sent by a calling side terminal, or send a video call request to a called side terminal.

In a call process, two parties, the calling side terminal and the called side terminal, exist.

If a terminal managed by the call control device is a calling side terminal, the call control device may receive a video call request sent by the terminal, where the video call request may be a common video call request sent by the terminal, or may also be a video call request converted by the terminal from a voice call request. The video call request optionally carries an advertisement insertion instruction, and carries an indication indicating that the video call request is a common video call request or a video call request obtained from conversion.

If a terminal managed by the call control device is a called side terminal, the call control device may send a video call request to the terminal, where the video call request may be a common video call request, or may also be a video call request converted from a voice call request, and the video call request or the voice call request is triggered by another calling side terminal.

It should be noted that, for brevity of description, description is mainly given herein by using an example that the terminal managed by the call control device is a calling side terminal, and an implementation manner in which the terminal managed by the call control device is a called side terminal is content easily figured out by a person skilled in the art in combination with this embodiment, and is no longer described in detail.

When the terminal managed by the call control device is a calling side terminal, after receiving the video call request of the terminal, the call control device may start a call setup process of a video call for the terminal.

402: Send a resource allocation instruction to a media gateway, so that the media gateway allocates a transmission resource for the video call according to the resource allocation instruction, and before the video call is connected, send an advertisement to the terminal by using the transmission resource.

After receiving the video call request of the terminal, the call control device further needs to send the resource allocation instruction to the media gateway, so as to instruct the media gateway to allocate a transmission resource required by the video call for the video call. In one case, when sending the resource allocation instruction to the media gateway, the call control device may carry an advertisement insertion instruction in the resource allocation instruction, and after receiving the resource allocation instruction that carries the advertisement insertion instruction, the media gateway may send an advertisement to the terminal by using the allocated transmission resource after the transmission resource is allocated and before the video call is connected. In another case, when sending the resource allocation instruction to the media gateway, the call control device may also not carry an advertisement insertion instruction in the instruction, and after receiving the resource allocation instruction, the media gateway automatically sends an advertisement to the terminal by using the allocated transmission resource after the transmission resource is allocated and before the video call is connected.

Generally, the advertisement sent by the media gateway is a video advertisement that conforms to a video call transmission requirement. The video advertisement may be a video advertisement that is acquired by the media gateway from an advertisement storage in advance or in real time.

In conclusion, in the advertisement insertion method provided in this embodiment, after a call is requested and before the call is connected, a call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

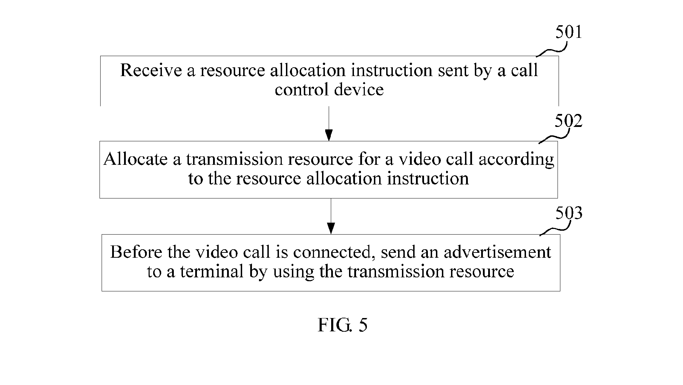

Referring to FIG. 5, a method flowchart of an advertisement insertion method according to still another embodiment of the present invention is shown. This embodiment is described by using an example that the advertisement insertion method is applied in the media gateway in the call control system 104 shown in FIG. 1, and the media gateway may be an MGW or an IMS MGW. The advertisement insertion method includes the following steps.

501: Receive a resource allocation instruction sent by a call control device.

The media gateway may receive the resource allocation instruction sent by the call control device, where the resource allocation instruction is sent by the call control device after the call control device receives a video call request sent by a calling side terminal, or sends a video call request to a called side terminal. The video call request is a common video call request, or a video call request converted from a voice call request.

The resource allocation instruction optionally includes an advertisement insertion instruction.

502: Allocate a transmission resource for a video call according to the resource allocation instruction.

After the media gateway receives the resource allocation instruction, the media gateway allocates a corresponding transmission resource for the video call. Specifically, that the media gateway allocates a corresponding transmission resource for the video cal refers to that the media gateway may establish a communication link between the media gateway and the terminal that requests the video call, where the communication link is used for bearing data in the video call.

503: Before the video call is connected, send an advertisement to the terminal by using the transmission resource.

After the media gateway allocates the transmission resource for the video call, the media gateway may send the advertisement to the terminal by using the allocated transmission resource. Generally, the advertisement sent by the media gateway is a video advertisement that conforms to a video call transmission requirement. The video advertisement may be a video advertisement that is acquired by the media gateway from an advertisement storage in advance or in real time.

In conclusion, in the advertisement insertion method provided in this embodiment, after a call is requested and before the call is connected, a media gateway sends an advertisement to a terminal by using a transmission resource of a video call, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

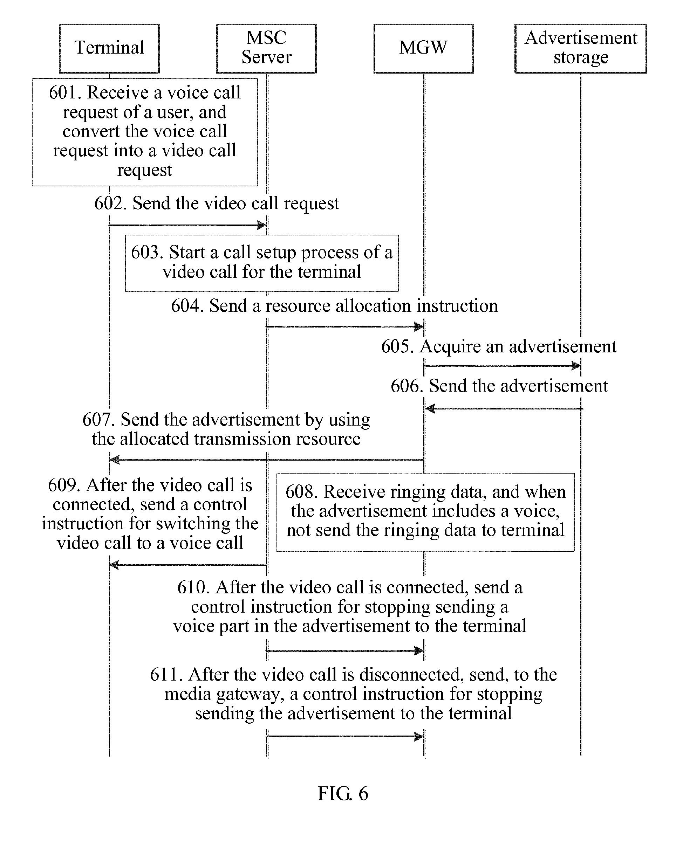

Referring to FIG. 6, a method flowchart of an advertisement insertion method according to another embodiment of the present invention is shown. This embodiment is described by using an example that the advertisement insertion method is applied in an implementation environment in which a call control device is an MSC Server, a media gateway is an MGW, a terminal is a calling side terminal, and a called side peer end is a fixed-line phone. The advertisement insertion method includes the following steps.

601: A terminal receives a voice call request of a user, and converts the voice call request into a video call request.

When calling a fixed-line phone, the user may initiate a voice call request to a terminal used by the user, for example, the user dials a phone number of the fixed-line phone by using a keypad on the terminal. When receiving the voice call request of the user, the terminal may automatically convert the voice call request into a video call request. Specifically, after receiving the voice call request of the user, the terminal may automatically convert the voice call request into a video call request. In this embodiment, the video call request is generally a Setup message. Optionally, the terminal may modify a message structure of the Setup message, so that the Setup message carries an advertisement insertion instruction.

602: The terminal sends the video call request to a call control device.

The terminal sends the video call request to an MSC Server with which the terminal is registered in advance, and the MSC Server receives the Setup message sent by the terminal, where the Setup message optionally carries the advertisement insertion instruction.

603: The call control device starts a call setup process of a video call for the terminal.

The MSC Server may start the call setup process of the video call for the terminal, where the call setup process may include the following steps.
1. The MSC Server sends, to an MGW, an H.248 ADD add message, which is used for triggering the MGW to begin to allocate various resources required in an initial stage of the call setup, where the resources include a media processing unit, a bearer connection, and the like.
2. The MSC Server analyzes that a called number is a fixed-line phone number, and accordingly, sends IAM (Initial Address Message, initial address information) information to a PSTN (Public Switched Telephone Network, public switched telephone network), so as to retain an idle relay circuit. The called number may be learned from the video call request sent by the terminal, and the relay circuit is used for constructing a transmission channel which is used for transmitting a voice call and is between the calling side terminal and the called side fixed-line phone. Next, after the relay circuit is reserved, the PSTN sends ACM (address complete message, address complete information) information to the MSC Server.
3. The MSC Server sends a Call Proceeding call proceeding signal to the terminal, so as to notify the terminal that the MSC Server is processing the call requested by the terminal.
4. The MSC Server requests a wireless access network and the terminal to allocate a radio resource and an access Backhaul (also called backhaul) resource for the video call. The radio resource refers to a resource related to a wireless air interface. The backhaul resource is a transmission resource between a base station and the MSC Server.

Because this step belongs to the prior art, the PSTN, the wireless access network, and the base station are all not specifically shown, and for other content that is not described in detail, reference may be made to details in a video call process in the prior art.

604: The call control device sends a resource allocation instruction to a media gateway, so that the media gateway allocates a transmission resource for the video call according to the resource allocation instruction.

The MSC Server sends, to the MGW, an H.248 MODIFY modify message, which is used to instruct the MGW to allocate the transmission resource for the video call. Optionally, the H.248 MODIFY modify message further carries an advertisement insertion instruction.

Next, the MGW receives the H.248 MODIFY message, that is, receives the resource allocation instruction sent by the MSC Server; and then the MGW allocates, according to the resource allocation instruction, a transmission resource corresponding to the video call. Specifically, the MGW may establish a communication link between the MGW and the terminal that requests the video call, where the communication link is used for bearing data in the video call.

605: The media gateway acquires an advertisement from an advertisement storage.

After receiving the H.248 MODIFY modify message, the MGW sends an advertisement acquisition request to the advertisement storage. Specifically, when receiving the H.248 MODIFY modify message that carries the advertisement insertion instruction, the MGW may acquire the advertisement from the advertisement storage; or when receiving a common H.248 MODIFY modify message that carries no advertisement insertion instruction, the MGW automatically acquires the advertisement from the advertisement storage. The MGW may store a network address of the advertisement storage in advance.

An advertisement initially stored by the advertisement storage may be in a format such as text, image, or video. In this case, before the advertisement storage sends the initially stored advertisement to the MGW, the advertisement storage may convert an advertisement in a text or an image format into an advertisement in a video format that conforms to a requirement of the transmission resource; or after the MGW receives the advertisement initially stored by the advertisement storage, the MGW converts an advertisement in a text or an image format into an advertisement in a video format that conforms to a requirement of the transmission resource.

606: The advertisement storage sends the advertisement to the media gateway.

After the advertisement storage receives the advertisement acquisition request sent by the MGW, the advertisement storage sends the advertisement to the MGW. Specifically, when sending the advertisement to the MGW, the advertisement storage may select, according to placement requirement information of an advertisement, an advertisement to be sent to the MGW, for example, the advertisement storage queries for an advertisement, where current time conforms to time indicated by a placement time segment in placement requirement information of the advertisement, and then sends the advertisement obtained through querying to the MGW.

607: Before the video call is connected, the media gateway sends the advertisement to the terminal by using the allocated transmission resource.

After the MGW allocates the transmission resource for the video call, and before the video call is connected, the MGW sends at least one of the acquired advertisement to the terminal by using the allocated transmission resource. In this case, a video call interface of the terminal begins to display the advertisement.

608: The media gateway receives ringing data, and when the advertisement includes a voice, does not send the ringing data to the terminal.

After the MGW allocates the transmission resource, before the video call is connected, the MGW further receives the ringing data. A process of receiving the ringing data by the MGW includes the following steps.
1. The MSC Server sends an Alerting ringing message to the terminal.
2. The ringing data is transmitted to the MGW on the relay circuit reserved by the PSTN. Generally, the MGW needs to forward the ringing data to the terminal, or generates ringing data by itself so as to send the ringing data to the terminal. However, in this embodiment, when the advertisement sent by the MGW to the terminal includes a voice, the MGW does not send the ringing data to the terminal, so as to avoid mutual interference between the ringing data and a voice part in the advertisement. This step is also applicable to another embodiment, which is not repeatedly described.

609: After the video call is connected, the call control device sends, to the terminal, a control instruction for switching the video call to a voice call, so as to stop the advertisement.

A process of connecting the video call includes the following steps.
1. When the called side fixed-line phone goes off-hook, the PSTN sends an ANM (Answer Message, answer information) to the MSC Server, to indicate that the video call is connected.
2. The MSC Server sends a Connect connect message to the terminal, to indicate that the called side fixed-line phone has connected the call. Meanwhile, if in step 608, the MGW sends the ringing data to the terminal, the MSC Server further needs to instruct the MGW to stop sending the ringing data.
3. The terminal returns Connection Acknowledge connection acknowledge information to the MSC Server, to indicate that the video call is connected.

In 601, the user requests a voice call. Therefore, after the video call is connected, the MSC Server may send the H.248 MODIFY modify message to the terminal, to instruct the terminal to switch the video call to a common voice call, so that the video advertisement insertion is not continued by the terminal during the call. Next, the MSC Server may receive a Modify Complete modify complete message from the terminal, to indicate that the modification is complete.

609 may be selectively performed by the MSC Server, and if the MSC Server does not perform 609, the following 610 may be performed. That is, the MSC Server may perform one of 609 and 610 by selection.

610: After the video call is connected, the call control device sends, to the media gateway, a control instruction for stopping sending the voice part in the advertisement to the terminal, so as to stop the voice part in the advertisement.

The MSC Server sends the H.248 MODIFY modify message to the MGW, to instruct the MGW to stop sending the voice part in the advertisement. In this case, the terminal can call normally, and display the video advertisement with no sound.

After 609 or 610, the MSC Serve may further request the wireless access network and the terminal to modify a corresponding radio resource and backhaul resource.

611: After the video call is disconnected, send, to the media gateway, a control instruction for stopping sending the advertisement to the terminal, so as to stop all parts of the advertisement.

If the call control device performs 610 rather than 609, the call control device may further perform 611 after 610.

A process of disconnecting the video call includes the following steps.
1. When the called side fixed-line phone goes on-hook, the PSTN sends an REL (Release Message, release) message to the MSC Server, so as to release the relay circuit.
2. The MSC Server sends a Disconnect disconnect message to the terminal, to indicate to the terminal that the call is disconnected.
3. The MSC Server sends an RLC (Release Complete Message, release complete information) message to the PSTN, to indicate that a remote end of the relay circuit is released.
4. The terminal returns a Release release message to the MSC Server.
5. The MSC Server returns a Release Complete release complete message to the terminal.
6. The MSC Server requests the wireless access network and the terminal to release the radio resource and the backhaul transmission resource that correspond to the call.

After the call control device receives the REL message, the MSC Server needs to send, to the MGW, a control instruction used for releasing the transmission resource allocated for the video call, and after the transmission resource allocated for the video call is released, the MGW stops sending the advertisement to the terminal. That is, the MSC Server sends, to the MGW, a control instruction for stopping sending the advertisement to the terminal, so as to stop all parts of the advertisement.

So far, the video advertisement displayed by the terminal ends.

It should be noted that, the process of connecting the video call, the process of receiving the ringing data, and the process of disconnecting the video call all belong to the prior art, the PSTN, the wireless access network, and the base station are all not specifically shown, and for other content that is not described in detail, reference may be made to details in the video call process in the prior art.

It should be further noted that, this embodiment may also be implemented in another implementation manner in which the call control device is a CSCF, the media gateway is an IMS MGW, and the terminal is a called side terminal, and is not limited to the foregoing implementation manner. Related implementation details are content easily figured out by a person skilled in the art in combination with this embodiment, and are no longer described in detail.

In conclusion, in the advertisement insertion method provided in this embodiment, after a call is requested and before the call is connected, a call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after the video call is connected, the call control device sends a control instruction to the terminal or the media gateway, so that the advertisement insertion can be stopped at proper time, thereby achieving an effect that an advertisement is inserted on a terminal without affecting a user call process.

Because the video call request sent by the terminal to the call control device may also be a common video call request, the process of acquiring the advertisement from the advertisement storage by the media gateway may also be executed in advance. Therefore, continue to refer to the following embodiment.

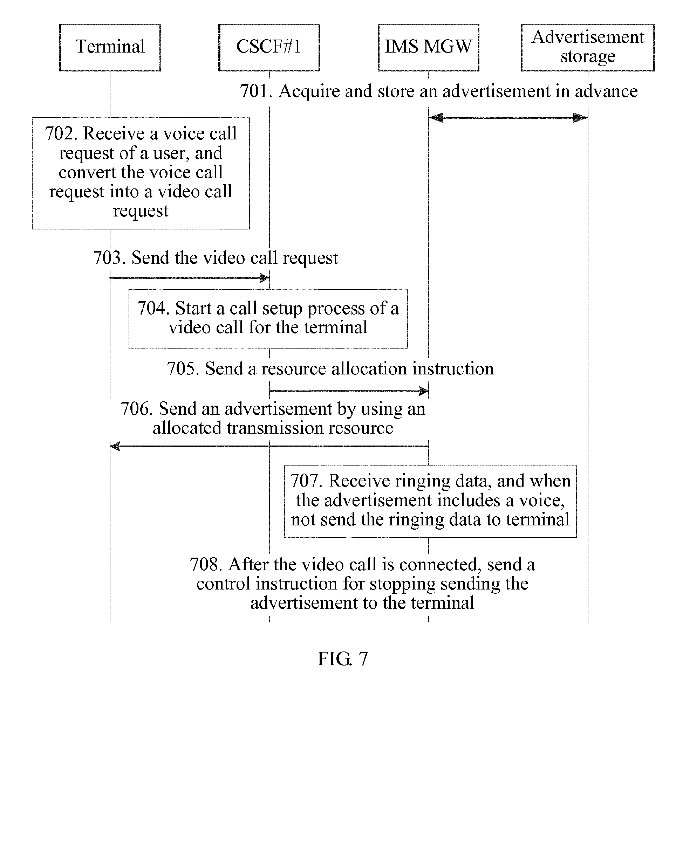

Referring to FIG. 7, a method flowchart of an advertisement insertion method according to another embodiment of the present invention is shown. This embodiment is described by using an example that the advertisement insertion method is applied in an implementation environment in which a call control device is a CSCF#1, a media gateway is an IMS MGW, a terminal is a calling side terminal, and a called side peer end is another terminal located in a CSCF#2 (where both are not shown). The advertisement insertion method includes the following steps.

701: A media gateway acquires an advertisement from an advertisement storage in advance, and stores the advertisement.

The IMS MGW may acquire at least one advertisement from the advertisement storage in advance, and store the at least one advertisement locally.

An advertisement initially stored by the advertisement storage may be in a format such as text, image, or video. In this case, before the advertisement storage sends the initially stored advertisement to the IMS MGW, the advertisement storage may convert an advertisement in a text or an image format into an advertisement in a video format that conforms to a requirement of a transmission resource; or after the IMS MGW receives the advertisement initially stored by the advertisement storage, the IMS MGW converts an advertisement in a text or an image format into an advertisement in a video format that conforms to a requirement of a transmission resource.

In addition, when sending the advertisement to the IMS MGW, the advertisement storage may select, according to placement requirement information of an advertisement, an advertisement to be sent to the IMS MGW, for example, the advertisement storage may select, according to the number of placements and a placement time segment in the placement requirement information of the advertisement, an advertisement to be sent to the IMS MGW.

702: A terminal sends a video call request to a call control device.

When a user calls a called side terminal for a video call, the user may initiate a video call request to a terminal used by the user, for example, the user dials a phone number of the called side terminal by using a keypad on the terminal, and then the terminal used by the user may send the video call request to a CSCF#1 with which the terminal is registered in advance. The video call request is generally an INVITE invite message, and an SDP (Session Description Protocol, session description protocol) parameter in the INVITE invite message is used to indicate video media and voice media, so as to indicate that it is a video call request (where if the SDP parameter only includes voice media, it indicates that it is a voice call request). Optionally, the terminal may modify a message structure of the INVITE invite message, so that the invite message carries an advertisement insertion instruction. The CSCF#1 receives the INVITE invite message sent by the terminal.

703: The call control device starts a call setup process of a video call for the terminal.

The CSCF#1 may start the call setup process of the video call for the terminal, where the call setup process may include the following steps.
1. The CSCF#1 with which a calling side terminal is registered sends an INVITE invite message to a CSCF#2 with which a called side terminal is registered (where both the called side terminal and the CSCF#2 are not shown), where the INVITE invite message can only include a voice media parameter rather than a video media parameter.
2. The calling side terminal and the called side terminal perform media negotiation by using the CSCF#1 and the CSCF#2 with which they are registered respectively. It should be noted that, in step 1, the INVTIE message may not include any media parameter, and the media negotiation is performed between the calling side terminal and the called side terminal through the process included in this step, and in this case, a media parameter provided by the calling side terminal includes video media and voice media.
3. The CSCF#1 triggers a PGW or a GGSN through a PCC (Policy and Charging Control, policy and charging control) to establish a bearer, so as to support transmitting video media and voice media. Because the video media and the voice media use different QoS, in this step, two different bearers may need to be used to transmit the video media and the voice media.

Because this step belongs to the prior art, the called side terminal, the CSCF#2, and the PCC are all not specifically shown, and for other content that is not described in detail, reference may be made to details in a video call process in the prior art.

704: The call control device sends a resource allocation instruction to a media gateway, so that the media gateway allocates a transmission resource for the video call according to the resource allocation instruction.

The CSCF#1 sends a MODIFY modify message to the IMS MGW, to instruct the media gateway to allocate the transmission resource for the video call. Because there is no direct interface between the CSCF#1 and the IMS MGW, the message may be forwarded through an MGCF (Media Gateway Control Function, media gateway control protocol) in an IMS. Optionally, the MODIFY modify message carries an advertisement insertion instruction.

It should be noted that, during a call between two terminals in the IMS, their media planes may directly communicate with each other. However, in this embodiment, if two terminals can directly communicate with each other, the CSCF#1 needs to insert the IMS MGW in a communication media path between the two terminals. That is, after address information (an IP address, a port number, a protocol type) of a media plane provided by the called side terminal is sent to the CSCF#1 through the CSCF#2, the CSCF#1 replaces the address information with address information of the IMS MGW, and sends the address information of the IMS MGW to the calling side terminal; similarly, after address information (an IP address, a port number, a protocol type) of a media plane provided by the calling side terminal is sent to the CSCF#1, the CSCF#1 replaces the address information with another piece of address information of the IMS MGW, and sends the address information of the IMS MGW to the called side terminal.

705: Before the video call is connected, the media gateway sends the advertisement to the terminal by using the allocated transmission resource.

The IMS MGW sends the stored advertisement to the terminal by using the allocated transmission resource. In this case, a video call interface of the terminal begins to display the advertisement.

706: The media gateway receives ringing data, and when the advertisement includes a voice, does not send the ringing data to the terminal.

After the IMS MGW allocates the transmission resource, and before the video call is connected, the IMS MGW further receives the ringing data.

A process of receiving the ringing data by the IMS MGW may include the following steps.
1. Related media negotiation may be performed again according to states of resources actually allocated for the calling side terminal and the called side terminal.
2. The CSCF#2 sends a 183 Ringing ringing message to the CSCF#1, to indicate that a resource of the called side terminal is ready and the called side terminal is ringed.
3. The CSCF#1 forwards the 183 Ringing ringing message to the calling side terminal.
4. The ringing data is uploaded from the called side terminal.

Generally, the IMS MGW needs to forward the ringing data to the calling side terminal, or generate ringing data for the calling side terminal by itself. However, in this embodiment, when the advertisement sent by the IMS MGW to the calling side terminal includes a voice, the IMS MGW does not send the ringing data to the calling side terminal, so as to avoid mutual interference between a voice part in the advertisement and the ringing data.

707: After the video call is connected, the call control device sends, to the media gateway, a control instruction for stopping sending the advertisement to the terminal, so as to stop the advertisement.

A process of connecting the video call includes the following steps.
1. When the called side terminal goes off-hook, the CSCF#2 with which the called side terminal is registered sends a 200 OK message to the CSCF#1, to indicate that the video call is connected.
2. The CSCF#1 sends the 200 OK message to the terminal, to indicate that the called side terminal has connected the video call, and if in step 706, the IMS MGW sends the ringing data to the terminal, the CSCF#1 further needs to instruct the IMS MGW to stop sending the ringing data.
3. The calling side terminal returns an ACK acknowledge message to the CSCF#1.
4. The CSCF#1 sends the ACK acknowledge message to the CSCF#2.
5. Video call communication is performed between the calling side terminal and the called side terminal.

Because the user requests a video call in 701, after the CSCF#1 sends the 200 OK message to the terminal, the CSCF#1 sends, to the IMS MGW, a control instruction for stopping sending the advertisement to the terminal, so as to stop the advertisement. In this case, the user can perform the video call normally without interference from the advertisement.

708: After the video call is disconnected, the call control device instructs the media gateway to release the allocated transmission resource.

A process of disconnecting the video call includes the following steps.
1. The called side terminal goes on-hook, and the CSCF#2 sends BYE release information to the CSCF#1.
2. The CSCF#1 sends the BYE release information to the calling side terminal.
3. The calling side terminal returns a 200 OK message to the CSCF#1.
4. The CSCF#1 returns the 200 OK message to the CSCF#2.
5. The CSCF#1 triggers the PGW or the GGSN through the PCC to delete or modify the bearer.

After the video call is disconnected, the CSCF#1 instructs the IMS MGW to release the transmission resource allocated for the video call.

It should be noted that, the process of connecting the video call, the process of receiving the ringing data, and the process of disconnecting the video call all belong to the prior art, the called side terminal, the CSCF#2, and the PCC are all not specifically shown, and for other content that is not described in detail, reference may be made to details in the video call process in the prior art.

It should be further noted that, this embodiment may also be implemented in another implementation manner in which the call control device is an MSC Server, the media gateway is an MGW, and the terminal is a called side terminal, and is not limited to the foregoing implementation manner. Related implementation details are content easily figured out by a person skilled in the art in combination with this embodiment, and are no longer described in detail.

In conclusion, in the advertisement insertion method provided in this embodiment, after a call is requested and before the call is connected, a call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service. In addition, after the video call is connected, the call control device sends a control instruction to the terminal or the media gateway, so that the advertisement insertion can be stopped at proper time, thereby achieving an effect that an advertisement is inserted on a terminal without affecting a user call process.

In the foregoing embodiment, an advertisement insertion process is mainly completed by the media gateway. When the advertisement insertion process is mainly completed by an advertisement storage, refer to the following embodiment.

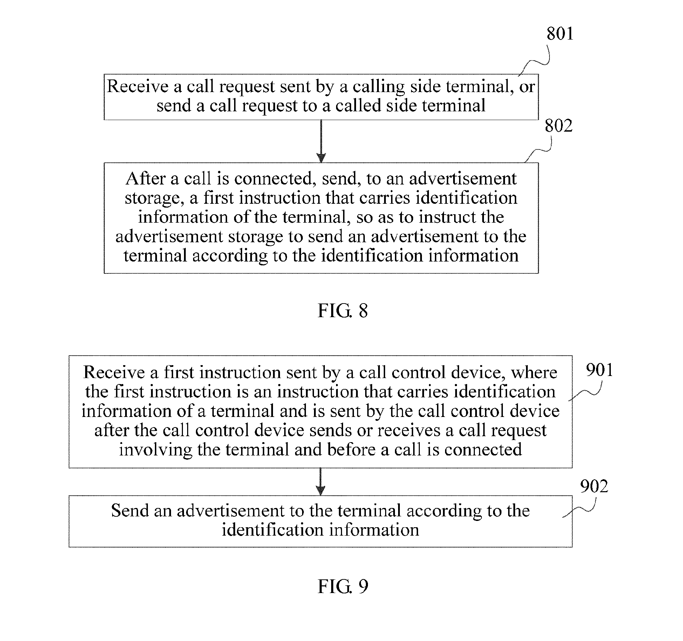

Referring to FIG. 8, a method flowchart of an advertisement insertion method according to an embodiment of the present invention is shown. This embodiment is mainly described by using an example that the advertisement insertion method is applied in the call control device shown in FIG. 1. The advertisement insertion method includes the following steps.

801: Receive a call request sent by a calling side terminal, or send a call request to a called side terminal.

In a call process, two parties, the calling side terminal and the called side terminal, exist.

If a terminal managed by the call control device is a calling side terminal, the call control device may receive a call request sent by the terminal, where the call request may be a voice call request or a video call request. The call request optionally carries an advertisement insertion instruction.

If a terminal managed by the call control device is a called side terminal, the call control device may send a call request to the terminal, where the call request may be a voice call request or a video call request.

It should be noted that, for brevity of description, description is mainly given herein by using an example that the terminal managed by the call control device is a calling side terminal, and an implementation manner in which the terminal managed by the call control device is a called side terminal is content easily figured out by a person skilled in the art, and is no longer described in detail.

When the terminal managed by the call control device is a calling side terminal, after receiving the call request of the terminal, the call control device may start a call setup process of a voice call or a video call for the terminal.

802: After the call is connected, send, to an advertisement storage, a first instruction that carries identification information of the terminal, so as to instruct the advertisement storage to send an advertisement to the terminal according to the identification information.

When starting the call setup process of the voice call or the video call for the terminal, the call control device may further send, to the advertisement storage, the first instruction that carries the identification information of the terminal, so as to instruct the advertisement storage to send the advertisement to the terminal according to the identification information. The call control device may obtain the identification information of the terminal from the call request, and may also obtain the identification information of the terminal by interacting with a management network element such as a PGW (PDN Gateway, PDN gateway). The identification information of the terminal is generally an IP address of the terminal in a packet switched network. When sending the advertisement to the terminal, the advertisement storage may send the advertisement to the terminal according to the IP address of the terminal and by using the packet switched network. In other words, after the advertisement storage receives the first instruction, the advertisement storage may send the advertisement to the terminal through the identification information of the terminal and by using a PDP Context (Packet Data Protocol Context, packet data protocol context) that has been established by the terminal and the IP address that has been allocated to the terminal. The advertisement may be a text, an image, or a video, or the like, and is preferably a video.

It should be noted that, the identification information of the terminal may also be an IMSI (International Mobile Subscriber Identification Number, international mobile subscriber identification number) or an MSISDN (Mobile Station ISDN, mobile station ISDN) of the terminal. In this case, the terminal may be registered with the advertisement storage in advance, and a register process is as follows.

First, the advertisement storage receives the IMSI or the MSISDN, which is sent by the terminal by using the packet switched network.

Next, the advertisement storage associates the IMSI or the MSISDN of the terminal with the IP address of the terminal in the packet switched network, where the IP address of the terminal may be learned in a communication process in the previous step.

Next, if the advertisement storage receives the first instruction of the call control device, and the identification information of the terminal carried by the first instruction is the IMSI or the MSISDN, the advertisement storage finds the IP address of the terminal in the packet switched network according to a pre-stored association relationship; and then sends the advertisement to the terminal according to the found IP address and by using the packet switched network.

In conclusion, in the advertisement insertion method provided in this embodiment, after a call is requested and before the call is connected, a call control device instructs an advertisement storage to send an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, the advertisement insertion is performed through the advertisement storage and a PS domain, signaling and a processing resource of a media gateway may not be occupied, and the advertisement insertion does not need to be performed through a transmission resource of a video call.

Referring to FIG. 9, a method flowchart of an advertisement insertion method according to another embodiment of the present invention is shown. This embodiment is mainly described by using an example that the advertisement insertion method is applied in the advertisement storage shown in FIG. 1. The advertisement insertion method includes the following steps.

901: Receive a first instruction sent by a call control device, where the first instruction is an instruction that carries identification information of a terminal and is sent by the call control device after the call control device sends or receives a call request involving the terminal and before a call is connected.

The advertisement storage may receive the first instruction sent by the call control device, where the first instruction carries the identification information of the terminal. The identification information of the terminal is generally an IP address, or an IMSI, or an MSISDN.

902: Send an advertisement to the terminal according to the identification information.

The advertisement storage may find the terminal through the identification information of the terminal, and then send the advertisement to the terminal through a PDP Context that is established in advance by the terminal in a PS domain and an IP address that has been allocated to the terminal.

It should be noted that, if the identification information of the terminal is an IP address, the advertisement storage may find the terminal directly according to the IP address of the terminal, and send the advertisement to the terminal; if the identification information of the terminal is an IMSI or an MSISDN, the advertisement storage finds the IP address of the terminal in a packet switched network according to a pre-stored association relationship, and then sends the advertisement to the terminal according to the found IP address and by using the packet switched network. The pre-stored association relationship may be an association relationship generated when the terminal is registered with the advertisement storage in advance, and a register process may be as follows.

First, the advertisement storage receives the IMSI or the MSISDN, which is sent by the terminal by using the packet switched network.

Next, the advertisement storage associates the IMSI or the MSISDN of the terminal with the IP address of the terminal in the packet switched network, where the IP address of the terminal may be learned in a communication process in the previous step.

In conclusion, in the advertisement insertion method provided in this embodiment, after a call is requested and before the call is connected, a call control device instructs an advertisement storage to send an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, the advertisement insertion is performed through the advertisement storage and a PS domain, signaling and a processing resource of a media gateway may not be occupied, and the advertisement insertion does not need to be performed through a transmission resource of a video call.

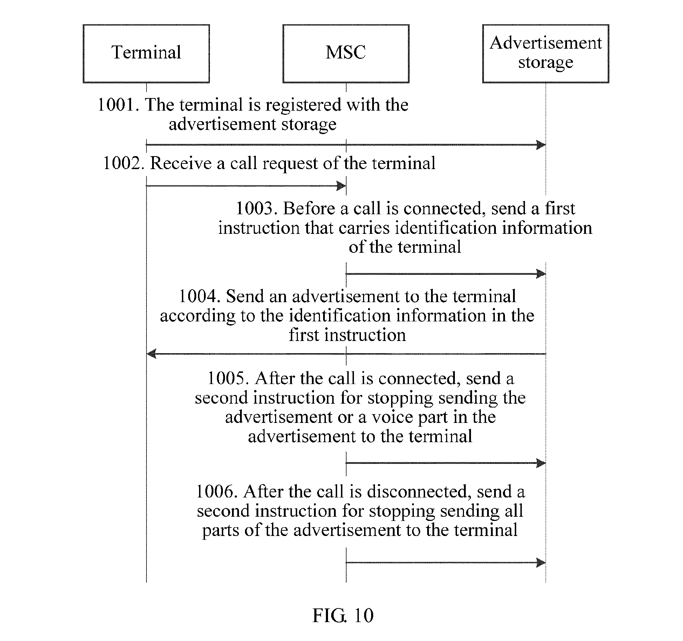

Referring to FIG. 10, a method flowchart of an advertisement insertion method according to another embodiment of the present invention is shown. This embodiment is mainly described by using an example that the advertisement insertion method is applied in an implementation environment in which a call control system is an MSC, a terminal is a calling side device, and a called side peer end is a fixed-line phone, where the MSC may include an MSC Server and an MGW, which sometimes is also called an MSC/VLR (Visitor Location Register, visitor location register). The advertisement insertion method includes the following steps.

1001: A terminal is registered with an advertisement storage.

The terminal may establish a PDP Context in a PS domain, and obtain an IP address, and then be registered with the advertisement storage, so that the advertisement storage can be connected to the terminal. In a register process, the terminal may use the IP address, an IMSI, or an MSISDN as identification information for registration. The terminal may obtain address information of the advertisement storage in advance through DNS (Domain Name System, domain name system) setting, an OTA (Over the Air Technology, over the air technology), or a DM (Device Management, device management) technology.

The register process may be as follows.

First, the advertisement storage receives the IMSI or the MSISDN, which is sent by the terminal by using a packet switched network.

Next, the advertisement storage associates the IMSI or the MSISDN of the terminal with the IP address of the terminal in the packet switched network, where the IP address of the terminal may be learned in a communication process in the previous step.

1002: The call control device receives a call request of the terminal.

The MSC may receive a voice call request or a video call request of the terminal. For example, the terminal decides to dial a fixed-line phone number to make a voice call, and accordingly, the terminal sends a Setup message to the MSC with which the terminal is registered in advance. Optionally, the Setup message further includes one or more items of an IP address of the advertisement storage, the IP address of the terminal, and the IMSI and the MSISDN of the terminal.

After receiving the call request of the terminal, the MSC may start a call setup process for the terminal.

The call setup process may include the following steps.
1. The MSC analyzes that a called number is a fixed-line phone number, and accordingly, sends IAM (Initial Address Message, initial address information) information to a PSTN (Public Switched Telephone Network, public switched telephone network), so as to retain an idle relay circuit. The called number may be learned from the call request sent by the terminal, and the relay circuit is used for constructing a transmission channel which is used for transmitting a voice call and is between the calling side terminal and the called side fixed-line phone. Next, after the relay circuit is reserved, the PSTN sends ACM (address complete message, address complete information) information to the MSC Server.
2. The MSC sends a Call Proceeding call proceeding signal to the terminal, so as to notify the terminal that the MSC is processing the call requested by the terminal.
3. The MSC requests a wireless access network and the terminal to allocate a radio resource and an access Backhaul (also called backhaul) resource for the call. The radio resource refers to a resource related to a wireless air interface. The backhaul resource is a transmission resource between a base station and the MSC.

Because this step belongs to the prior art, the PSTN, the wireless access network, and the base station are all not specifically shown, and for other content that is not described in detail, reference may be made to details in a call process in the prior art.

1003: Before the call is connected, the call control device sends, to the advertisement storage, a first instruction that carries the identification information of the terminal, to instruct the advertisement storage to send an advertisement to the terminal.

When the MSC starts the call setup process for the terminal, the MSC sends, to the advertisement storage, the first instruction that carries the identification information of the terminal, to instruct the advertisement storage to send the advertisement to the terminal. The identification information of the terminal may be the IP address, or the IMSI, or the MSISDN.

It should be noted that, if the identification information of the terminal is the IP address, 1001 is an optional part.

1004: The advertisement storage receives the first instruction, and sends the advertisement to the terminal according to the identification information in the first instruction.

After the advertisement storage receives the instruction, the advertisement storage may send the advertisement to the terminal through the identification information of the terminal and by using a PDP Context that has been established by the terminal and the IP address that has been allocated to the terminal. The advertisement may be a text, an image, or a video, or the like, and is preferably a video.

It can be known from the advertisement storage method shown in FIG. 2 that, the advertisement storage may receive placement requirement information which is of each advertisement and is sent by an advertisement policy and charging control function, where the placement requirement information includes a placement time segment and a placement area. Therefore, when sending the advertisement to the terminal, the advertisement storage may select, according to placement requirement information of an advertisement, an advertisement to be sent to the terminal. Specifically, this step may include:
1. Query for an advertisement that conforms to the placement requirement information, where the conforming to the placement requirement information includes that current time conforms to time indicated by the placement time segment, and/or an area where the terminal is located conforms to the placement area, where the area where the terminal is located is determined according to the identification information of the terminal, and the determining the area where the terminal is located according to the identification information of the terminal may be performed by using, but not limited to, positioning of an LBS (Location Based Service, location based service) server.
2. Send, according to the identification information, to the terminal, the advertisement obtained through querying that conforms to the placement requirement information.

Next, the terminal may receive the advertisement sent by the advertisement storage, and then begin to play the advertisement on a screen of the terminal.

1005: After the call is connected, the call control device sends, to the advertisement storage, a second instruction for stopping sending the advertisement or a voice part in the advertisement to the terminal.

A process of connecting the call may include the following steps.
1. When the called side fixed-line phone goes off-hook, the PSTN sends an ANM (Answer Message, answer information) to the MSC, to indicate that the call is connected.
2. The MSC sends a Connect connect message to the terminal, to indicate that the called side fixed-line phone has connected the call.
3. The terminal returns Connection Acknowledge connection acknowledge information to the MSC, to indicate that the call is connected.

After the call is connected, if the terminal requests a voice call, and the MSC decides not to insert the advertisement, or the terminal requests a video call, the MSC may send, after the call is connected, to the advertisement storage, a second instruction for stopping sending the advertisement to the terminal, so as to stop the advertisement.

If the terminal requests a voice call, and the MSC decides to continue to insert the advertisement, the MSC may also send, to the advertisement storage, a second instruction for stopping sending the voice part in the advertisement to the terminal, so as to stop the voice part in the advertisement, and avoid interference between the voice part in the advertisement and the voice call.

1006: After the call is disconnected, the call control device sends, to the advertisement storage, a second instruction for stopping sending all parts of the advertisement to the terminal, so as to stop all the parts of the advertisement.

A process of disconnecting the call may include the following steps.
1. When the called side fixed-line phone goes on-hook, the PSTN sends an REL (Release Message, release) message to the MSC, so as to release the relay circuit.
2. The MSC sends a Disconnect disconnect message to the terminal, to indicate to the terminal that the call is disconnected.
3. The MSC sends an RLC (Release Complete Message, release complete message) message to the PSTN, to indicate that a remote end of the relay circuit is released.
4. The terminal returns a Release release message to the MSC.
5. The MSC returns a Release Complete release complete message to the terminal.
6. The MSC requests the wireless access network and the terminal to release the radio resource and the backhaul transmission resource that correspond to the call.

If in 1005, the MSC only instructs the advertisement storage to stop sending the voice part in the advertisement to the terminal, after the call is disconnected, the MSC instructs the advertisement storage to stop sending the advertisement to the terminal.

So far, the advertisement displayed by the terminal ends.

It should be noted that, the process of connecting the call and the process of disconnecting the call both belong to the prior art, the PSTN, the wireless access network, and the base station are all not specifically shown, and for other content that is not described in detail, reference may be made to details in the call process in the prior art.

It should be further noted that, this embodiment may also be implemented in another implementation manner in which the call control device is a CSCF, the media gateway is an IMS MGW, and the terminal is a called side terminal, and is not limited to the foregoing implementation manner. Related implementation details are content easily figured out by a person skilled in the art in combination with this embodiment, and are no longer described in detail.

In conclusion, in the advertisement insertion method provided in this embodiment, after a call is requested and before the call is connected, a call control device instructs an advertisement storage to send an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, the advertisement insertion is performed through the advertisement storage and a PS domain, signaling and a processing resource of a media gateway may not be occupied, and the advertisement insertion does not need to be performed through a transmission resource of a video call.

In the foregoing embodiment, an advertisement insertion process is mainly controlled by the call control system. When the advertisement insertion control process is mainly completed by a terminal, refer to the following embodiment.

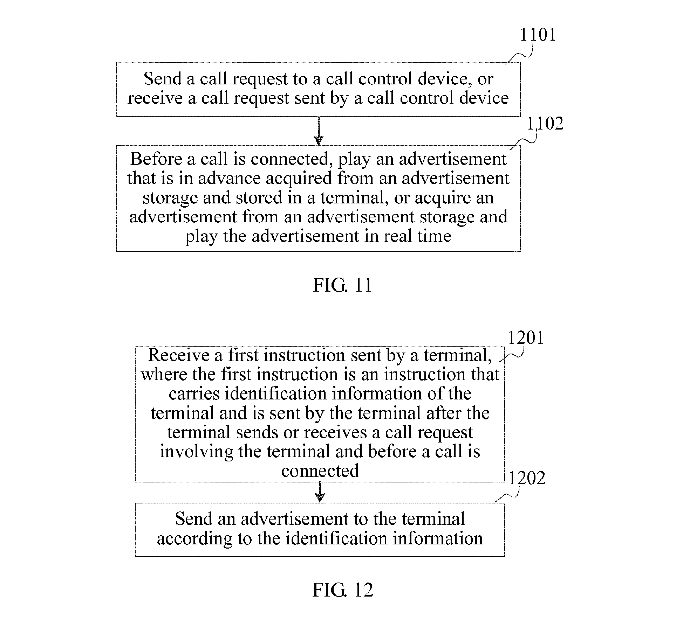

Referring to FIG. 11, a method flowchart of an advertisement insertion method according to an embodiment of the present invention is shown. This embodiment is mainly described by using an example that the advertisement insertion method is applied in the terminal 105 shown in FIG. 1. The advertisement insertion method includes the following steps.

1101: Send a call request to a call control device, or receive a call request sent by a call control device.

If the terminal is a calling side terminal, after receiving an operation from a user, the terminal may send the call request to the call control device. The call request may be a voice call request or a video call request.

If the terminal is a called side terminal, the terminal may receive the call request sent by the call control device. The call request may be a voice call request or a video call request.

1102: Before a call is connected, play an advertisement that is in advance acquired from an advertisement storage and stored in the terminal, or acquire an advertisement from an advertisement storage and play the advertisement in real time.

Next, before the call is connected, the terminal may play the advertisement that is in advance acquired from the advertisement storage and stored in the terminal, or acquire the advertisement from the advertisement storage and play the advertisement in real time. The advertisement may be a text, a picture, or a video, and the terminal may present the advertisement to the user by displaying the advertisement in a part of or an entire area of a screen.

In conclusion, in the advertisement insertion method provided in this embodiment, after a call is requested and before the call is connected, a terminal automatically plays an advertisement acquired from an advertisement storage, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call.

Referring to FIG. 12, a method flowchart of an advertisement insertion method according to another embodiment of the present invention is shown. This embodiment is mainly described by using an example that the advertisement insertion method is applied in the advertisement storage shown in FIG. 1. The advertisement insertion method includes the following steps.

1201: Receive a first instruction sent by a terminal, where the first instruction is an instruction that carries identification information of the terminal and is sent by the terminal after the terminal sends or receives a call request involving the terminal and before a call is connected.

The advertisement storage may receive the first instruction sent by the terminal, where the first instruction carries the identification information of the terminal. The identification information of the terminal is generally an IP address, or an IMSI, or an MSISDN.

1202: Send an advertisement to the terminal according to the identification information.

The advertisement storage may find the terminal through the identification information of the terminal, and then send the advertisement to the terminal through a PDP Context that is established in advance by the terminal in a PS domain and an IP address that has been allocated to the terminal.

It should be noted that, if the identification information of the terminal is an IP address, the advertisement storage may find the terminal directly according to the IP address of the terminal, and send the advertisement to the terminal; if the identification information of the terminal is an IMSI or an MSISDN, the advertisement storage finds the IP address of the terminal in a packet switched network according to a pre-stored association relationship, and then sends the advertisement to the terminal according to the found IP address and by using the packet switched network. The pre-stored association relationship may be an association relationship generated when the terminal is registered with the advertisement storage in advance, and a register process may be as follows.

First, the advertisement storage receives the IMSI or the MSISDN, which is sent by the terminal by using the packet switched network.

Next, the advertisement storage associates the IMSI or the MSISDN of the terminal with the IP address of the terminal in the packet switched network, where the IP address of the terminal may be learned in a communication process in the previous step.

In conclusion, in the advertisement insertion method provided in this embodiment, after a call is requested and before the call is connected, a terminal automatically plays an advertisement acquired from an advertisement storage, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call.

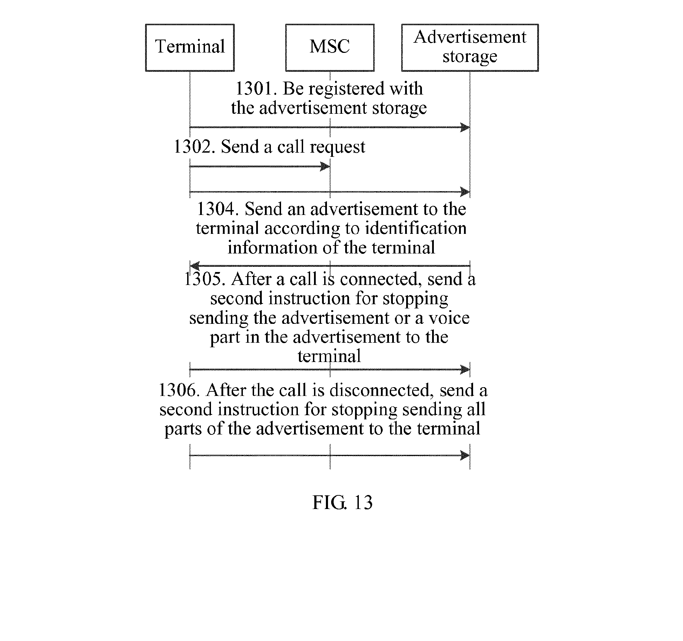

Referring to FIG. 13, a method flowchart of an advertisement insertion method according to an embodiment of the present invention is shown. This embodiment is described by using an example that the advertisement insertion method is applied in an implementation environment in which a call control device is an MSC, a terminal is a calling side device, and a called side peer end is a fixed-line phone, where the MSC may include an MSC Server and an MGW. The advertisement insertion method includes the following steps.

1301: A terminal is registered with an advertisement storage.

The terminal may establish a PDP Context in a PS domain, and obtain an IP address, and then be registered with the advertisement storage, so that the advertisement storage can be connected to the terminal. In a register process, the terminal may use the IP address, an IMSI, or an MSISDN as identification information for registration. The terminal may obtain address information of the advertisement storage in advance through DNS (Domain Name System, domain name system) setting, an OTA (Over the Air Technology, over the air technology), or a DM (Device Management, device management) technology.

The register process may be as follows.

First, the advertisement storage receives the IMSI or the MSISDN, which is sent by the terminal by using a packet switched network.

Next, the advertisement storage associates the IMSI or the MSISDN of the terminal with the IP address of the terminal in the packet switched network, where the IP address of the terminal may be learned in a communication process in the previous step.

1302: The terminal sends a call request to a call control device.

The terminal may send a voice call request or a video call request to the MSC. For example, the terminal decides to dial a fixed-line phone number to make a voice call, and accordingly, the terminal sends a Setup message to the MSC with which the terminal is registered in advance. Optionally, the Setup message further includes one or more items of an IP address of the advertisement storage, the IP address of the terminal, and the IMSI and the MSISDN of the terminal.

After receiving the call request of the terminal, the MSC may start a call setup process for the terminal.

The call setup process may include the following steps.
1. The MSC analyzes that a called number is a fixed-line phone number, and accordingly, sends IAM (Initial Address Message, initial address information) information to a PSTN (Public Switched Telephone Network, public switched telephone network), so as to retain an idle relay circuit. The called number may be learned from the call request sent by the terminal, and the relay circuit is used for constructing a transmission channel which is used for transmitting a voice call and is between the calling side terminal and the called side fixed-line phone. Next, after the relay circuit is reserved, the PSTN sends ACM (address complete message, address complete information) information to the MSC Server.
2. The MSC sends a Call Proceeding call proceeding signal to the terminal, so as to notify the terminal that the MSC is processing the call requested by the terminal.
3. The MSC requests a wireless access network and the terminal to allocate a radio resource and an access Backhaul (also called backhaul) resource for the call. The radio resource refers to a resource related to a wireless air interface. The backhaul resource is a transmission resource between a base station and the MSC.

Because this step belongs to the prior art, the PSTN, the wireless access network, and the base station are all not specifically shown, and for other content that is not described in detail, reference may be made to details in a call process in the prior art.

1303: Before the call is connected, the terminal sends, to the advertisement storage, a first instruction that carries identification information of the terminal, so that the advertisement storage sends an advertisement to the terminal.

When the MSC starts the call setup process for the terminal, the terminal sends, to the advertisement storage, the first instruction that carries the identification information of the terminal, so that the advertisement storage sends the advertisement to the terminal. The identification information of the terminal may be the IP address, or the IMSI, or the MSISDN.

It should be noted that, if the identification information of the terminal is the IP address, 1301 is an optional part.

1304: The advertisement storage receives the first instruction, and sends the advertisement to the terminal according to the identification information of the terminal.

After the advertisement storage receives the first instruction, the advertisement storage may send the advertisement to the terminal through the identification information of the terminal and by using a PDP Context that has been established by the terminal and the IP address that has been allocated to the terminal. The advertisement may be a text, an image, or a video, or the like, and is preferably a video.

It can be known from the advertisement storage method shown in FIG. 2 that, the advertisement storage may receive placement requirement information which is of each advertisement and is sent by an advertisement policy and charging control function, where the placement requirement information includes a placement time segment and a placement area. Therefore, when sending the advertisement to the terminal, the advertisement storage may select, according to placement requirement information of an advertisement, an advertisement to be sent to the terminal. Specifically, this step may include:
1. Query for an advertisement that conforms to the placement requirement information, where the conforming to the placement requirement information includes that current time conforms to time indicated by the placement time segment, and/or an area where the terminal is located conforms to the placement area, where the area where the terminal is located is determined according to the identification information of the terminal, and the determining the area where the terminal is located according to the identification information of the terminal may be performed by using, but not limited to, positioning of an LBS (Location Based Service, location based service) server.
2. Send, according to the identification information, to the terminal, the advertisement obtained through querying that conforms to the placement requirement information.

Next, the terminal may receive the advertisement sent by the advertisement storage, and then begin to play the advertisement on a screen of the terminal.

In this case, the terminal directly presents at least one of the received advertisement to the user, that is, an interface of the terminal begins to display the advertisement.

1305: After the call is connected, the terminal sends, to the advertisement storage, a second instruction for stopping sending the advertisement or a voice part in the advertisement to the terminal.

A process of connecting the call may include the following steps.
1. When the called side fixed-line phone goes off-hook, the PSTN sends an ANM (Answer Message, answer information) to the MSC, to indicate that the call is connected.
2. The MSC sends a Connect connect message to the terminal, to indicate that the called side fixed-line phone has connected the call.
3. The terminal returns Connection Acknowledge connection acknowledge information to the MSC, to indicate that the call is connected.

After the call is connected, if the terminal requests a voice call, and the terminal decides not to insert the advertisement, or the terminal requests a video call, the terminal may send, after the call is connected, to the advertisement storage, a second instruction for stopping sending the advertisement to the terminal, so as to stop the advertisement.

If the terminal requests a voice call, and the terminal decides to continue to insert the advertisement, the terminal may also send, to the advertisement storage, a second instruction for stopping sending the voice part in the advertisement to the terminal, so as to stop the voice part in the advertisement, and avoid interference between the voice part in the advertisement and the voice call.

1306: After the call is disconnected, the terminal sends, to the advertisement storage, a second instruction for stopping sending all parts of the advertisement to the terminal, so as to stop all the parts of the advertisement.

A process of disconnecting the call may include the following steps.
1. When the called side fixed-line phone goes on-hook, the PSTN sends an REL (Release Message, release) message to the MSC, so as to release the relay circuit.
2. The MSC sends a Disconnect disconnect message to the terminal, to indicate to the terminal that the call is disconnected.
3. The MSC sends an RLC (Release Complete Message, release complete message) message to the PSTN, to indicate that a remote end of the relay circuit is released.
4. The terminal returns a Release release message to the MSC.
5. The MSC returns a Release Complete release complete message to the terminal.
6. The MSC requests the wireless access network and the terminal to release the radio resource and the backhaul transmission resource that correspond to the call.

If in 1305, the terminal only instructs the advertisement storage to stop sending the voice part in the advertisement to the terminal, after the call is disconnected, the MSC instructs the advertisement storage to stop sending the advertisement to the terminal.

So far, the advertisement displayed by the terminal ends.

It should be noted that, the process of connecting the call and the process of disconnecting the call both belong to the prior art, the PSTN, the wireless access network, and the base station are all not specifically shown, and for other content that is not described in detail, reference may be made to details in the call process in the prior art.

It should be further noted that, this embodiment may also be implemented in another implementation manner in which the call control device is a CSCF, the media gateway is an IMS MGW, and the terminal is a called side terminal, and is not limited to the foregoing implementation manner. Related implementation details are content easily figured out by a person skilled in the art in combination with this embodiment, and are no longer described in detail.

In conclusion, in the advertisement insertion method provided in this embodiment, after a call is requested and before the call is connected, a terminal automatically plays an advertisement acquired from an advertisement storage, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call.

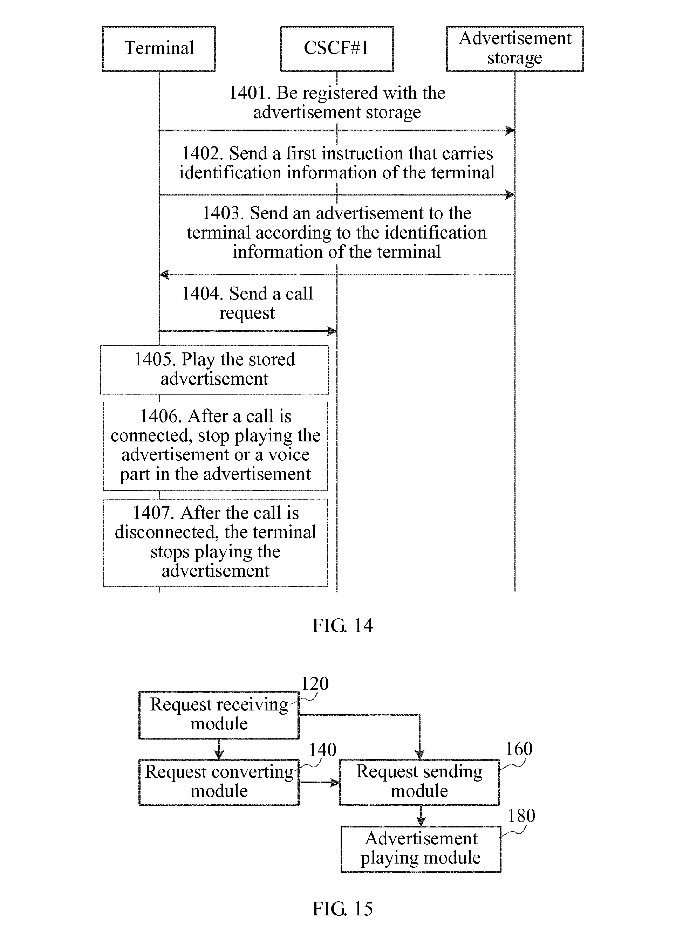

Referring to FIG. 14, a method flowchart of an advertisement insertion method according to another embodiment of the present invention is shown. This embodiment is mainly described by using an example that the advertisement insertion method is applied in an implementation environment in which a call control device is a CSCF#1, a media gateway is an IMS MGW, a terminal is a calling side terminal, and a called side device is another terminal located in a CSCF#2 (where both the CSCF#2 and the another terminal are not shown). The advertisement insertion method includes the following steps.

1401: A terminal is registered with an advertisement storage.

The terminal may establish a PDP Context in a PS domain, and obtain an IP address, and then be registered with the advertisement storage, so that the advertisement storage can be connected to the terminal. In a register process, the terminal may use the IP address, an IMSI, or an MSISDN as identification information for registration. The terminal may obtain address information of the advertisement storage in advance through DNS (Domain Name System, domain name system) setting, an OTA (Over the Air Technology, over the air technology), or a DM (Device Management, device management) technology.

The register process may be as follows.

First, the advertisement storage receives the IMSI or the MSISDN, which is sent by the terminal by using a packet switched network.

Next, the advertisement storage associates the IMSI or the MSISDN of the terminal with the IP address of the terminal in the packet switched network, where the IP address of the terminal may be learned in a communication process in the previous step.

1402: The terminal sends, to the advertisement storage, a first instruction that carries identification information of the terminal, so that the advertisement storage sends an advertisement to the terminal.

The terminal sends, to the advertisement storage, the first instruction that carries the identification information of the terminal, so that the advertisement storage sends the advertisement to the terminal. The identification information of the terminal may be the IP address, or the IMSI, or the MSISDN.

It should be noted that, if the identification information of the terminal is the IP address, 1401 is an optional part.

1403: The advertisement storage receives the first instruction, and sends the advertisement to the terminal according to the identification information of the terminal.

After the advertisement storage receives the first instruction, the advertisement storage may send the advertisement to the terminal through the identification information of the terminal and by using a PDP Context that has been established by the terminal and the IP address that has been allocated to the terminal. The advertisement may be a text, an image, or a video, or the like, and is preferably a video.

It can be known from the advertisement storage method shown in FIG. 2 that, the advertisement storage may receive placement requirement information which is of each advertisement and is sent by an advertisement policy and charging control function, where the placement requirement information includes a placement time segment and a placement area. Therefore, when sending the advertisement to the terminal, the advertisement storage may select, according to placement requirement information of an advertisement, an advertisement to be sent to the terminal. Specifically, this step may include:
1. Query for an advertisement that conforms to the placement requirement information, where the conforming to the placement requirement information includes that current time conforms to time indicated by the placement time segment, and/or an area where the terminal is located conforms to the placement area, where the area where the terminal is located is determined according to the identification information of the terminal, and the determining the area where the terminal is located according to the identification information of the terminal may be performed by using, but not limited to, positioning of an LBS (Location Based Service, location based service) server.
2. Send, according to the identification information, to the terminal, the advertisement obtained through querying that conforms to the placement requirement information.

Next, the terminal may receive the advertisement sent by the advertisement storage, and then begin to play the advertisement on a screen of the terminal.

In this case, the terminal directly presents at least one of the received advertisement to the user, that is, an interface of the terminal begins to display the advertisement.

In this case, the terminal does not present the advertisement to the user by now, but stores the advertisement in a storage of the terminal. The stored advertisement may be one or more.

1404: The terminal sends a call request to a call control device.

The calling side terminal decides to make a voice call to another terminal, and the calling side terminal sends an INVITE invite message to a CSCF#1 with which the calling side terminal is registered.

Next, the CSCF#1 starts a call setup process for the terminal. The call setup process may include the following steps.
1. The CSCF#1 with which the calling side terminal is registered sends an INVITE invite message to a CSCF#2 with which a called side terminal is registered (where both the called side terminal and the CSCF#2 are not shown), where the INVITE invite message herein includes a voice media parameter.
2. The calling side terminal and the called side terminal perform media negotiation by using the CSCF#1 and the CSCF#2 with which they are registered respectively. It should be noted that, in step 1, the INVTIE message may not include any media parameter, and the media negotiation is performed between the calling side terminal and the called side terminal through the process included in this step, and in this case, a media parameter provided by the calling side terminal includes voice media.
3. The CSCF#1 triggers a GGSN through a PCC (Policy and Charging Control, policy and charging control) to establish a bearer, so as to support transmitting voice media.

Because this step belongs to the prior art, the called side terminal, the CSCF#2, and the PCC are all not specifically shown, and for other content that is not described in detail, reference may be made to details in a video call process in the prior art.

1405: The terminal plays the stored advertisement.

The terminal may play the stored advertisement. Specifically, the terminal may display the stored advertisement in a part of or an entire area of the screen in an overlay or overlap manner. Generally, after sending the INVITE invite message to the CSCF#1, the terminal plays the stored advertisement. However, it should be aware that, when determining that the user is dialing, the terminal can display the stored advertisement on a part of the area of the screen.

1406: After the call is connected, the terminal stops playing the advertisement or a voice part in the advertisement.
1. When the called side terminal goes off-hook, the CSCF#2 with which the called side terminal is registered sends a 200 OK message, to indicate that the call is connected.
2. The CSCF#1 sends the 200 OK message to the terminal, to indicate that the called side terminal has connected the call.
3. The calling side terminal returns an ACK acknowledge message to the CSCF#1.
4. The CSCF#1 sends the ACK acknowledge message to the CSCF#2.
5. The call is performed between the calling side terminal and the called side terminal.

After the call is connected, if the terminal requests a voice call, and the terminal decides not to insert the advertisement, or the terminal request a video call, the terminal may stop playing the advertisement after the call is connected.

If the terminal requests a voice call, and the terminal decides to continue to insert the advertisement, the terminal stops playing the voice part in the advertisement, so as to avoid interference between the voice part in the advertisement and the voice call.

1407: After the call is disconnected, the terminal stops playing all parts of the advertisement.

A process of disconnecting the call may include the following steps.
1. The called side terminal goes on-hook, and the CSCF#2 sends BYE release information to the CSCF#1.
2. The CSCF#1 sends the BYE release information to the calling side terminal.
3. The calling side terminal returns a 200 OK message to the CSCF#1.
4. The CSCF#1 returns the 200 OK message to the CSCF#2.
5. The CSCF#1 triggers the GGSN through the PCC to delete or modify the bearer.

If in 1407, the terminal only instructs the advertisement storage to stop sending the voice part in the advertisement to the terminal, after the call is disconnected, the terminal instructs the advertisement storage to stop sending the advertisement to the terminal.

So far, the advertisement displayed by the terminal ends.

It should be noted that, the process of connecting the call and the process of disconnecting the call both belong to the prior art, the CSCF#2, the another terminal, and the PCC are all not specifically shown, and for other content that is not described in detail, reference may be made to details in the call process in the prior art.

It should be further noted that, this embodiment may also be implemented in another implementation manner in which the call control device is an MSC, the media gateway is an MGW, and the terminal is a called side terminal, and is not limited to the foregoing implementation manner. Related implementation details are content easily figured out by a person skilled in the art in combination with this embodiment, and are no longer described in detail.

In conclusion, in the advertisement insertion method provided in this embodiment, after a call is requested and before the call is connected, a terminal automatically plays an advertisement acquired from an advertisement storage and stored locally, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call.

The following is apparatus embodiments of the present invention, which can be used to execute the method embodiments of the present invention. For technical details that are not disclosed in the apparatus embodiments of the present invention, refer to the method embodiments of the present invention.

Referring to FIG. 15, a structural block diagram of a terminal according to an embodiment of the present invention is shown. The terminal includes a request receiving module 120, a request converting module 140, a request sending module 160, and an advertisement playing module 180.

The request receiving module 120 is configured to receive a call request from a user, where the call request is a voice call request or a video call request.

The request converting module 140 is configured to, if the call request received by the request receiving module 120 is the voice call request, convert the voice call request into a video call request.

The request sending module 160 is configured to send, to a call control device, the video call request received by the request receiving module 120 or converted by the request converting module 140, so that the call control device instructs a media gateway to allocate a transmission resource for the video call.

The advertisement playing module 180 is configured to, before a video call corresponding to the video call request sent by the request sending module 160 is connected, receive an advertisement by using the transmission resource and play the advertisement.

In conclusion, in the terminal provided in this embodiment, after a call is requested and before the call is connected, a media gateway sends an advertisement to the terminal by using a transmission resource of a video call, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

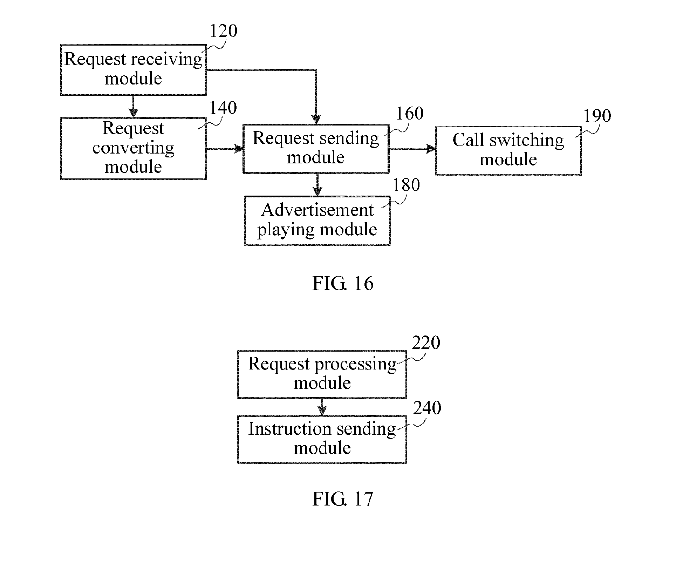

For further description of the terminal provided in the previous embodiment, refer to FIG. 16, which shows a structural block diagram of a terminal according to another embodiment of the present invention. The terminal includes a request receiving module 120, a request converting module 140, a request sending module 160, an advertisement playing module 180, and a call switching module 190.

The request receiving module 120 is configured to receive a call request from a user, where the call request is a voice call request or a video call request.

The request converting module 140 is configured to, if the call request received by the request receiving module 120 is the voice call request, convert the voice call request into a video call request.

The request sending module 160 is configured to send, to a call control device, the video call request received by the request receiving module 120 or converted by the request converting module 140, so that the call control device instructs a media gateway to allocate a transmission resource for the video call.

The advertisement playing module 180 is configured to, before a video call corresponding to the video call request sent by the request sending module 160 is connected, receive an advertisement by using the transmission resource and play the advertisement.

The call switching module 190 is configured to, when the video call request sent by the request sending module 160 to the call control device is the video call request converted by the request converting module 140 from the voice call request, after the video call corresponding to the video call request sent by the request sending module 160 is connected, switch the video call to a voice call.

In conclusion, in the terminal provided in this embodiment, after a call is requested and before the call is connected, a media gateway sends an advertisement to the terminal by using a transmission resource of a video call, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after a call is connected, a call switching module switches the video call to a voice call, so that the advertisement insertion can be stopped at proper time, thereby avoiding interfering with a normal call of the terminal.

Referring to FIG. 17, a structural block diagram of a call control device according to an embodiment of the present invention is shown. The call control device includes a request processing module 220 and an instruction sending module 240.

The request processing module 220 is configured to receive a video call request sent by a calling side terminal, or send a video call request to a called side terminal, where the video call request is a common video call request, or a video call request converted from a voice call request.

The instruction sending module 240 is configured to send a resource allocation instruction to a media gateway, so that the media gateway allocates, according to the resource allocation instruction, a transmission resource for a video call corresponding to the video call request received or sent by the request processing module 220, and before the video call is connected, send an advertisement to the terminal by using the transmission resource.

In conclusion, in the call control device provided in this embodiment of the present invention, after a call is requested and before the call is connected, the call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

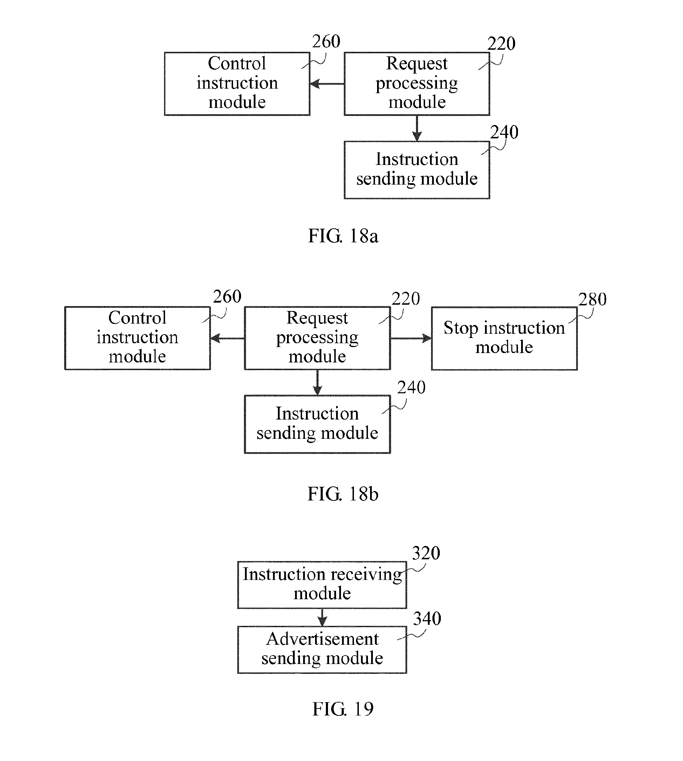

For further description of the call control device provided in the previous embodiment, refer to FIG. 18a, which shows a structural block diagram of a call control device according to another embodiment of the present invention. The call control device includes a request processing module 220, an instruction sending module 240, and a control instruction module 260.

The request processing module 220 is configured to receive a video call request sent by a calling side terminal, or send a video call request to a called side terminal, where the video call request is a common video call request, or a video call request converted from a voice call request.

The instruction sending module 240 is configured to send a resource allocation instruction to a media gateway, so that the media gateway allocates, according to the resource allocation instruction, a transmission resource for a video call corresponding to the video call request received or sent by the request processing module 220, and before the video call is connected, send an advertisement to the terminal by using the transmission resource.

If the video call request received or sent by the request processing module 220 is the video call request converted from the voice call request, the call control device further includes:
the control instruction module 260, configured to, after the video call corresponding to the video call request received or sent by the request processing module 220 is connected, send, to the terminal, a control instruction for switching the video call to a voice call, so as to stop the advertisement; or
after the video call is connected, send, to the media gateway, a control instruction for stopping sending a voice part in the advertisement to the terminal, so as to stop the voice part in the advertisement; and
after the video call is disconnected, send, to the media gateway, a control instruction for stopping sending the advertisement to the terminal, so as to stop all parts of the advertisement.

If the video call request received or sent by the request processing module 220 is the common video call request, the call control device further includes: a stop instruction module 280, referring to FIG. 18b.

The stop instruction module 280 is configured to, after the video call corresponding to the video call request received or sent by the request processing module 220 is connected, send, to the media gateway, a control instruction for stopping sending the advertisement to the terminal, so as to stop the advertisement.

In conclusion, in the call control device provided in this embodiment of the present invention, after a call is requested and before the call is connected, the call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after the video call is connected, the call control device sends a control instruction to the terminal or the media gateway, so that the advertisement insertion can be stopped at proper time, thereby achieving an effect that the advertisement is inserted on the terminal without affecting a user call process.

Referring to FIG. 19, a structural block diagram of a media gateway according to an embodiment of the present invention is shown. The media gateway includes an instruction receiving module 320 and an advertisement sending module 340.

The instruction receiving module 320 is configured to receive a resource allocation instruction sent by a call control device, where the resource allocation instruction is sent by the call control device after the call control device receives a video call request sent by a calling side terminal, or sends a video call request to a called side terminal, where the video call request is a common video call request, or a video call request converted from a voice call request.

The advertisement sending module 340 is configured to allocate a transmission resource for the video call according to the resource allocation instruction received by the instruction receiving module 320, and before the video call is connected, send an advertisement to the terminal by using the transmission resource.

In conclusion, in the media gateway provided in this embodiment, after a call is requested and before the call is connected, the media gateway sends an advertisement to a terminal by using a transmission resource of a video call, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

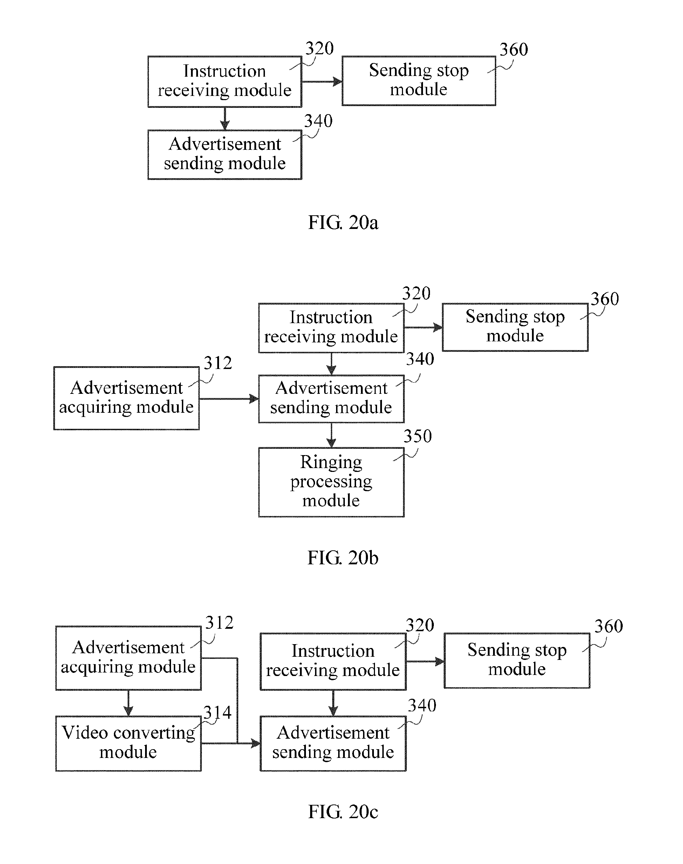

For further description of the media gateway provided in the previous embodiment, refer to FIG. 20a, which shows a structural block diagram of a media gateway according to another embodiment of the present invention. The media gateway includes an advertisement acquiring module 312, an instruction receiving module 320, and an advertisement sending module 340.

The advertisement acquiring module 312 is configured to acquire the advertisement from an advertisement storage, where the advertisement is a text, a voice, an image, or a video.

The instruction receiving module 320 is configured to receive a resource allocation instruction sent by a call control device, where the resource allocation instruction is sent by the call control device after the call control device receives a video call request sent by a calling side terminal, or sends a video call request to a called side terminal, where the video call request is a common video call request, or a video call request converted from a voice call request.

The advertisement sending module 340 is configured to allocate a transmission resource for the video call according to the resource allocation instruction received by the instruction receiving module 320, and before the video call is connected, send, by using the transmission resource, the advertisement acquired by the advertisement acquiring module 312 to the terminal.

The media gateway may further include a video converting module 314, referring to FIG. 20b.

The video converting module 314 is configured to, when the advertisement acquired by the advertisement acquiring module 312 is in a text, a voice, or an image format, convert the advertisement acquired by the advertisement acquiring module 312 to a video format that conforms to a requirement of the transmission resource.

The media gateway may further include a ringing processing module 350, referring to FIG. 20c.

The ringing processing module 350 is configured to, when the advertisement sent by the advertisement sending module 340 includes a voice part, receive ringing data, but not send the ringing data to the terminal.

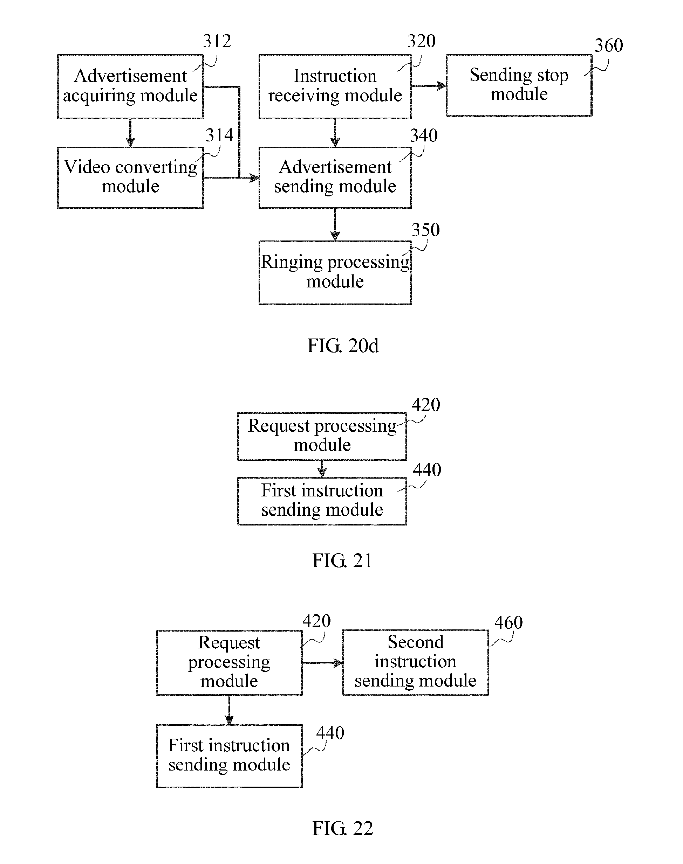

The media gateway may further include a sending stop module 360, referring to FIG. 20d.

The sending stop module 360 is configured to, after the video call is connected, receive a control instruction sent by the call control device, and stop, according to the control instruction, sending the advertisement to the terminal; or
after the video call is connected, receive a control instruction sent by the call control device, and stop, according to the control instruction, sending a voice part in the advertisement to the terminal; and
after the video call is disconnected, receive a control instruction sent by the call control device, and stop, according to the control instruction, sending all parts of the advertisement to the terminal.

In conclusion, in the media gateway provided in this embodiment, after a call is requested and before the call is connected, the media gateway sends an advertisement to a terminal by using a transmission resource of a video call, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

Referring to FIG. 21, a structural block diagram of a call control device according to an embodiment of the present invention is shown. The call control device includes a request processing module 420, and a first instruction sending module 440.

The request processing module 420 is configured to receive a call request sent by a calling side terminal, or send a call request to a called side terminal.

The first instruction sending module 440 is configured to, before a call corresponding to the call request received or sent by the request processing module 420 is connected, send, to an advertisement storage, a first instruction that carries identification information of the terminal, so as to instruct the advertisement storage to send an advertisement to the terminal according to the identification information.

In conclusion, in the call control device provided in this embodiment, after a call is requested and before the call is connected, the call control device instructs an advertisement storage to send an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, the advertisement insertion is performed through the advertisement storage and a PS domain, signaling and a processing resource of a media gateway may not be occupied, and the advertisement insertion does not need to be performed through a transmission resource of a video call.

For further description of the call control device provided in the previous embodiment, refer to FIG. 22, which shows a structural block diagram of a call control device according to another embodiment of the present invention. The call control device includes a request processing module 420, a first instruction sending module 440, and a second instruction sending module 460.

The request processing module 420 is configured to receive a call request sent by a calling side terminal, or send a call request to a called side terminal.

The first instruction sending module 440 is configured to, before a call corresponding to the call request received or sent by the request processing module is connected, send, to an advertisement storage, a first instruction that carries identification information of the terminal, so as to instruct the advertisement storage to send an advertisement to the terminal according to the identification information.

The second instruction sending module 460 is configured to, after the video call is connected, send, to the advertisement storage, a second instruction for stopping sending the advertisement to the terminal, so as to stop the advertisement; or
after the video call is connected, send, to the advertisement storage, a second instruction for stopping sending a voice part in the advertisement to the terminal, so as to stop the voice part in the advertisement; and
after the video call is disconnected, send, to the advertisement storage, a second instruction for stopping sending all parts of the advertisement to the terminal, so as to stop all the parts of the advertisement.

In conclusion, the call control device provided in this embodiment solves a problem in the prior art that advertisement insertion can be implemented only when a mobile terminal requests data in a specific server in the Internet, and achieves an effect that advertisement insertion can also be implemented when a terminal does not access data in a server in the Internet, but only uses a voice call service or a video call service. In addition, after a call is connected, the call control device sends a control instruction to an advertisement storage, so that the advertisement insertion can be stopped at proper time, thereby achieving an effect that the advertisement is inserted on the terminal without affecting a user call process.

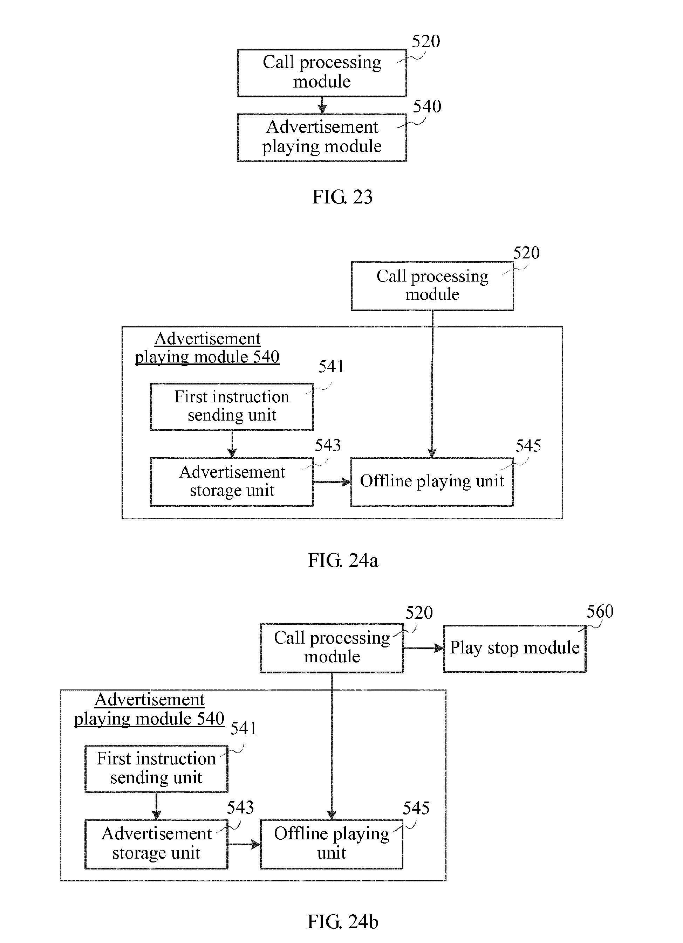

Referring to FIG. 23, a structural block diagram of a terminal according to an embodiment of the present invention is shown. The terminal includes a call processing module 520 and an advertisement playing module 540.

The call processing module 520 is configured to send a call request to a call control device, or receive a call request sent by a call control device.

The advertisement playing module 540 is configured to, before a call corresponding to the call request received or sent by the call processing module 520 is connected, play an advertisement that is in advance acquired from an advertisement storage and stored in the terminal, or acquire an advertisement from the advertisement storage and play the advertisement in real time.

In conclusion, in the terminal provided in this embodiment, after a call is requested and before the call is connected, the terminal automatically plays an advertisement acquired from an advertisement storage, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call.

For further description of the terminal shown in FIG. 23, refer to FIG. 24a, which shows a structural block diagram of a terminal according to still another embodiment of the present invention. The terminal includes a call processing module 520 and an advertisement playing module 540.

The call processing module 520 is configured to send a call request to a call control device, or receive a call request sent by a call control device.

The advertisement playing module 540 is configured to, before a call corresponding to the call request received or sent by the call processing module 520 is connected, play an advertisement that is in advance acquired from an advertisement storage and stored in the terminal.

Specifically, the advertisement playing module 540 includes:
a first instruction sending unit 541, configured to send, to the advertisement storage, a first instruction that carries identification information of the terminal, so that the advertisement storage sends an advertisement to the terminal;
an advertisement storage unit 543, configured to receive the advertisement, which is sent by the advertisement storage according to the identification information sent by the first instruction sending unit 541, and store the advertisement; and
an offline playing unit 545, configured to, before the call is connected, play the advertisement stored by the advertisement storage unit 543.

The terminal may further include: a play stop module 560, referring to FIG. 24b.

The play stop module 560 is configured to, before the call corresponding to the call request received or sent by the call processing module 520 is connected, stop playing the advertisement; or
after the call is connected, stop playing a voice part in the advertisement; and
after the call is disconnected, stop playing all parts of the advertisement.

In conclusion, in the terminal provided in this embodiment, after a call is requested and before the call is connected, the terminal automatically plays an advertisement acquired from an advertisement storage, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call. Moreover, after a call is connected, the terminal automatically stops playing the advertisement or a voice part in the advertisement, so that the advertisement insertion can be stopped at proper time, thereby achieving an effect that the advertisement is inserted on the terminal without affecting a user call process.

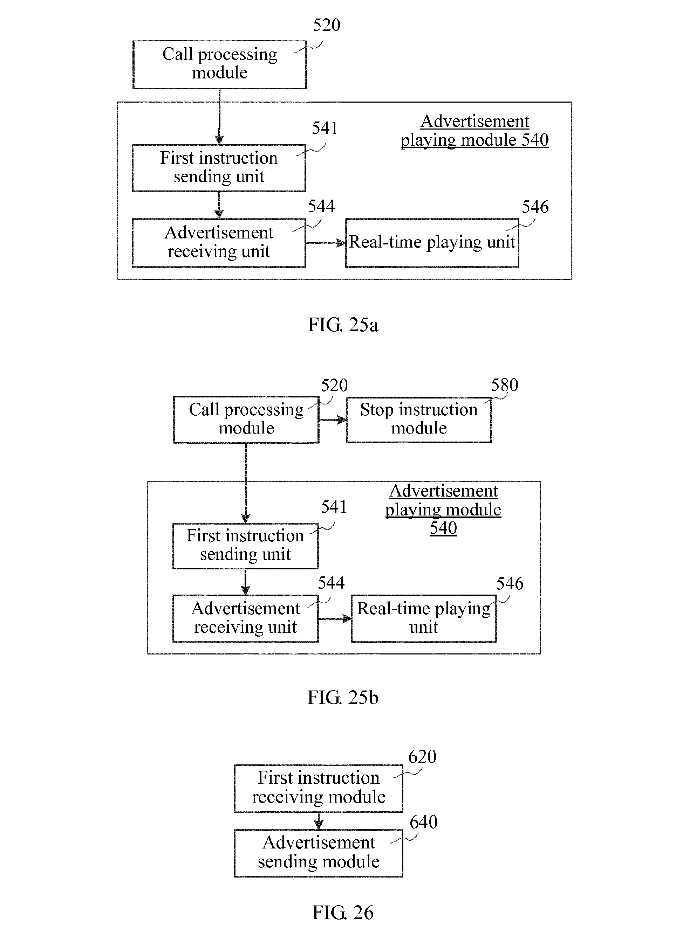

For further description of the terminal shown in FIG. 23, refer to FIG. 25a, which shows a structural block diagram of a terminal according to still another embodiment of the present invention. The terminal includes a call processing module 520 and an advertisement playing module 540.

The call processing module 520 is configured to send a call request to a call control device, or receive a call request sent by a call control device.

The advertisement playing module 540 is configured to, before a call corresponding to the call request received or sent by the call processing module 520 is connected, acquire an advertisement from the advertisement storage and play the advertisement in real time.

Specifically, the advertisement playing module 540 includes:
a first instruction sending unit 541, configured to, before the call is connected, send, to the advertisement storage, a first instruction that carries identification information of the terminal, so that the advertisement storage sends an advertisement to the terminal;
an advertisement receiving unit 544, configured to receive the advertisement, which is sent by the advertisement storage according to the identification information sent by the first instruction sending unit 541; and
a real-time playing unit 546, configured to play in real time the advertisement received by the advertisement receiving unit 544.

The terminal further includes a stop instruction module 580.

The stop instruction module 580 is configured to, after the call corresponding to the call request received or sent by the call processing module 520 is connected, send, to the advertisement storage, a second instruction for stopping sending the advertisement to the terminal, so as to stop the advertisement; or
after the call is connected, send, to the advertisement storage, a second instruction for stopping sending a voice part in the advertisement to the terminal, so as to stop the voice part in the advertisement; and
after the call is disconnected, send, to the advertisement storage, a second instruction for stopping sending all parts of the advertisement to the terminal, so as to stop all the parts of the advertisement.

In conclusion, in the terminal provided in this embodiment, after a call is requested and before the call is connected, the terminal automatically plays an advertisement acquired from an advertisement storage, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, compared with the foregoing embodiment, in this embodiment, a control process of the advertisement insertion is completed by the terminal, signaling and a processing resource of a call control system may not be occupied, and the advertisement insertion does not need to be performed through a transmission resource of a video call. Moreover, after a call is connected, the terminal instructs the advertisement storage to stop sending the advertisement or a voice part in the advertisement, so that the advertisement insertion can be stopped at proper time, thereby achieving an effect that the advertisement is inserted on the terminal without affecting a user call process.

Referring to FIG. 26, a structural block diagram of an advertisement storage according to an embodiment of the present invention is shown. The advertisement storage includes a first instruction receiving module 620 and an advertisement sending module 640.

The first instruction receiving module 620 is configured to receive a first instruction sent by a call control device or a terminal, where the first instruction is an instruction that carries identification information of the terminal and is sent by the call control device or the terminal after the call control device or the terminal sends or receives a call request involving the terminal and before the call is connected.

The advertisement sending module 640 is configured to send an advertisement to the terminal according to the identification information received by the first instruction receiving module 620.

In conclusion, the advertisement storage provided in this embodiment sends an advertisement to a terminal by receiving a first instruction sent by a call control device or the terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

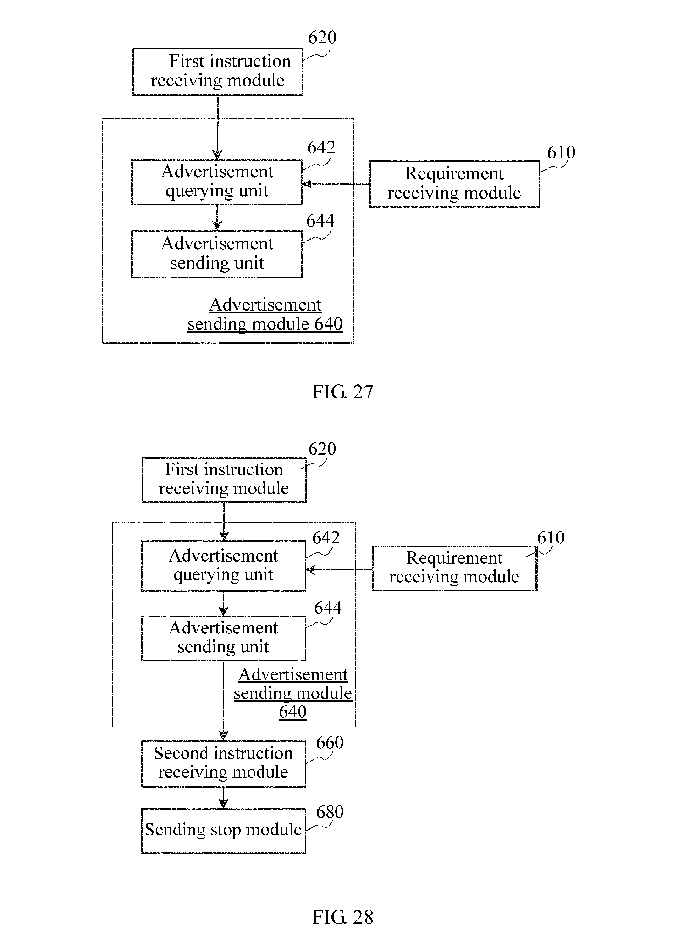

For further description of the advertisement storage provided in FIG. 26, refer to FIG. 27, which shows a structural block diagram of an advertisement storage according to another embodiment of the present invention. The advertisement storage includes a requirement receiving module 610, a first instruction receiving module 620, and an advertisement sending module 640.

The requirement receiving module 610 is configured to receive placement requirement information which is of each advertisement and is sent by an advertisement policy and charging control function, where the placement requirement information includes a placement time segment and a placement area.

The first instruction receiving module 620 is configured to receive a first instruction sent by a call control device or a terminal, where the first instruction is an instruction that carries identification information of the terminal and is sent by the call control device or the terminal after the call control device or the terminal sends or receives a call request involving the terminal and before the call is connected.

The advertisement sending module 640 is configured to send an advertisement to the terminal according to the identification information received by the first instruction receiving module 620.

Specifically, the advertisement sending module 640 specifically includes:
an advertisement querying unit 642, configured to query for an advertisement that conforms to the placement requirement information received by the requirement receiving module 610, where the conforming to the placement requirement information includes that current time conforms to time indicated by the placement time segment, and/or an area where the terminal is located conforms to the placement area, where the area where the terminal is located is determined according to the identification information of the terminal; and
an advertisement sending unit 644, configured to send, according to the identification information received by the first instruction receiving module 620, to the terminal, the advertisement obtained through querying that conforms to the placement requirement information.

In conclusion, the advertisement storage provided in this embodiment sends an advertisement to a terminal by receiving a first instruction sent by a call control device or the terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, the advertisement storage may select, according to placement requirement information, an advertisement to be sent to the terminal, thereby achieving an effect of better and more targetedly sending the advertisement.

For further description of the advertisement storage provided in FIG. 27, refer to FIG. 28, which shows a structural block diagram of an advertisement storage according to still another embodiment of the present invention. The advertisement storage includes a requirement receiving module 610, a first instruction receiving module 620, an advertisement sending module 640, a second instruction receiving module 660, and a sending stop module 680.

The requirement receiving module 610 is configured to receive placement requirement information which is of each advertisement and is sent by an advertisement policy and charging control function, where the placement requirement information includes a placement time segment and a placement area.

The first instruction receiving module 620 is configured to receive a first instruction sent by a call control device or a terminal, where the first instruction is an instruction that carries identification information of the terminal and is sent by the call control device or the terminal after the call control device or the terminal sends or receives a call request involving the terminal and before the call is connected.

The advertisement sending module 640 is configured to send an advertisement to the terminal according to the identification information received by the first instruction receiving module 620.

Specifically, the advertisement sending module 640 specifically includes:
an advertisement querying unit 642, configured to query for an advertisement that conforms to the placement requirement information received by the requirement receiving module 610, where the conforming to the placement requirement information includes that current time conforms to time indicated by the placement time segment, and/or an area where the terminal is located conforms to the placement area, where the area where the terminal is located is determined according to the identification information of the terminal; and
an advertisement sending unit 644, configured to send, according to the identification information received by the first instruction receiving module 620, to the terminal, the advertisement obtained through querying that conforms to the placement requirement information.

The second instruction receiving module 660 is configured to receive a second instruction sent by the call control device or the terminal after the call is connected.

The sending stop module is configured to stop, according to the second instruction received by the second instruction receiving module 660, sending the advertisement or a voice part in the advertisement to the terminal 680.

In conclusion, the advertisement storage provided in this embodiment sends, after a call is requested and before the call is connected, an advertisement to a terminal for play, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. Moreover, after the call is connected, a second instruction sent by a call control device or the terminal and used for stopping sending the advertisement or a voice part in the advertisement is received, so that the advertisement insertion can be stopped at proper time, thereby achieving an effect that the advertisement is inserted on the terminal without affecting a user call process.

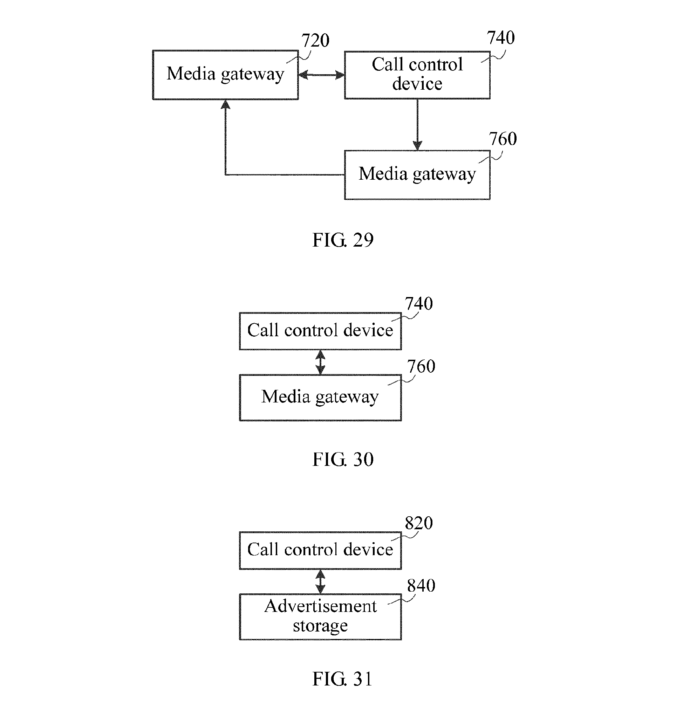

Referring to FIG. 29, a structural block diagram of an advertisement insertion system according to an embodiment of the present invention is shown. The advertisement insertion system includes a terminal 720, a call control device 740, and a media gateway 760.

The terminal 720 may be the terminal provided in the embodiment corresponding to FIG. 15 or FIG. 16.

The call control device 740 may be the call control device provided in the embodiment corresponding to FIG. 17 or FIG. 18.

The media gateway 760 may be the media gateway provided in the embodiment corresponding to FIG. 19 or FIG. 20.

In conclusion, in the advertisement insertion system provided in this embodiment, after a call is requested and before the call is connected, a call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after the video call is connected, the call control device sends a control instruction to the terminal or the media gateway, so that the advertisement insertion can be stopped at proper time, thereby achieving an effect that the advertisement is inserted on the terminal without affecting a user call process.

Referring to FIG. 30, a structural block diagram of an advertisement insertion system according to another embodiment of the present invention is shown. The advertisement insertion system includes a call control device 740 and a media gateway 760.

The call control device 740 may be the call control device provided in the embodiment corresponding to FIG. 17 or FIG. 18.

The media gateway 760 may be the media gateway provided in the embodiment corresponding to FIG. 19 or FIG. 20.

In conclusion, in the advertisement insertion system provided in this embodiment, after a call is requested and before the call is connected, a call control device instructs a media gateway to send, by using a transmission resource of a video call, an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after the video call is connected, the call control device sends a control instruction to the terminal or the media gateway, so that the advertisement insertion can be stopped at proper time, thereby achieving an effect that the advertisement is inserted on the terminal without affecting a user call process.

Referring to FIG. 31, a structural block diagram of an advertisement insertion system according to still another embodiment of the present invention is shown. The advertisement insertion system includes a call control device 820 and an advertisement storage 840.

The call control device 820 may be the call control device provided in the embodiment corresponding to FIG. 21 or FIG. 22.

The advertisement storage 840 may be the advertisement storage provided in the embodiment corresponding to FIG. 26, FIG. 27, or FIG. 28.

In conclusion, in the advertisement insertion system provided in this embodiment, after a call is requested and before the call is connected, a call control device instructs an advertisement storage to send an advertisement to a terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after the video call is connected, the call control device sends a second instruction to the advertisement storage, so that the advertisement insertion can be stopped at proper time, thereby achieving an effect that the advertisement is inserted on the terminal without affecting a user call process.

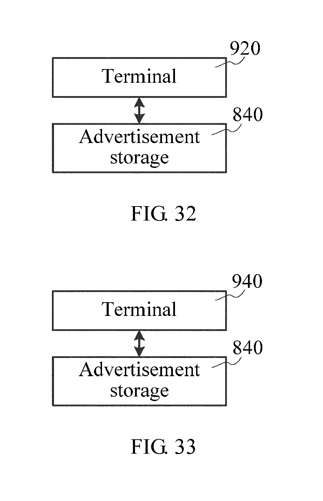

Referring to FIG. 32, a structural block diagram of an advertisement insertion system according to yet another embodiment of the present invention is shown. The advertisement insertion system includes a terminal 920 and an advertisement storage 840.

The terminal 920 may be the terminal provided in the embodiment corresponding to FIG. 23 or FIG. 24.

The advertisement storage 840 may be the advertisement storage provided in the embodiment corresponding to FIG. 26 or FIG. 27.

In conclusion, in the advertisement insertion system provided in this embodiment, after a call is requested and before the call is connected, a terminal instructs an advertisement storage to send an advertisement to the terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service. In addition, after the video call is connected, the terminal sends a second instruction to the advertisement storage, so that the advertisement insertion can be stopped at proper time, thereby achieving an effect that the advertisement is inserted on the terminal without affecting a user call process.

Referring to FIG. 33, a structural block diagram of an advertisement insertion system according to yet another embodiment of the present invention is shown. The advertisement insertion system includes a terminal 940 and an advertisement storage 840.

The terminal 940 may be the terminal provided in the embodiment corresponding to FIG. 25 or FIG. 26.

The advertisement storage 840 may be the advertisement storage provided in the embodiment corresponding to FIG. 26, FIG. 27, or FIG. 28.

In conclusion, in the advertisement insertion system provided in this embodiment, after a call is requested and before the call is connected, a terminal instructs an advertisement storage to send an advertisement to the terminal, thereby solving a problem in the prior art that advertisement insertion can be implemented only when a mobile terminal requests data in a specific server in the Internet, and achieving an effect that advertisement insertion can also be implemented when a terminal does not access data in a server in the Internet, but only uses a voice call service or a video call service.

A person of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk, or the like.

It should be noted that, in the foregoing embodiments of the terminal and the base station, the included units are divided according to functional logic, but the present invention is not limited to the foregoing division, as long as corresponding functions can be implemented. In addition, specific names of the functional units are merely for facilitating differentiation between each other, but are not intended to limit the protection scope of the present invention.

The foregoing description is merely exemplary specific implementation manners of the present invention, but is not intended to limit the protection scope of the present invention. Any variation or replacement figured out by a person skilled in the art within the technical scope disclosed in the embodiments of the present invention shall fall within the protection scope of the present invention. Therefore, the protection scope of the present invention shall be subject to the protection scope of the claims.

## Claims

1. An advertisement insertion method, comprising:
receiving a call request from a user, wherein the call request is a voice call request or a video call request;
if the call request is the voice call request, converting the voice call request into a video call request;
sending the video call request to a call control device, so that the call control device instructs a media gateway to allocate a transmission resource for the video call; and
before the video call is connected, receiving an advertisement by using the transmission resource and playing the advertisement.

2. The advertisement insertion method according to claim 1, wherein after the receiving an advertisement by using the transmission resource and playing the advertisement, the method further comprises:
if the video call request sent to the call control device is the video call request converted from the voice call request, after the video call is connected, switching the video call to a voice call.

3. An advertisement insertion method, comprising:
receiving a video call request sent by a calling side terminal, or sending a video call request to a called side terminal; and
sending a resource allocation instruction to a media gateway, so that the media gateway allocates a transmission resource for the video call according to the resource allocation instruction, and before the video call is connected, sending an advertisement to the terminal by using the transmission resource, wherein
the video call request is a common video call request, or a video call request converted from a voice call request.

4. The advertisement insertion method according to claim 3, wherein if the video call request is the video call request converted from the voice call request, after the sending a resource allocation instruction to a media gateway, the method further comprises:
after the video call is connected, sending, to the terminal, a control instruction for switching the video call to a voice call, so as to stop the advertisement; or
after the video call is connected, sending, to the media gateway, a control instruction for stopping sending a voice part in the advertisement to the terminal, so as to stop the voice part in the advertisement; and
after the video call is disconnected, sending, to the media gateway, a control instruction for stopping sending the advertisement to the terminal, so as to stop all parts of the advertisement.

5. The advertisement insertion method according to claim 3, wherein if the video call request is the common video call request, after the sending a resource allocation instruction to a media gateway, the method further comprises:
after the video call is connected, sending, to the media gateway, a control instruction for stopping sending the advertisement to the terminal, so as to stop the advertisement.

6. An advertisement insertion method, comprising:
receiving a resource allocation instruction sent by a call control device, wherein the resource allocation instruction is sent by the call control device after the call control device receives a video call request sent by a calling side terminal, or sends a video call request to a called side terminal; and
allocating a transmission resource for the video call according to the resource allocation instruction, and before the video call is connected, sending an advertisement to the terminal by using the transmission resource, wherein
the video call request is a common video call request, or a video call request converted from a voice call request.

7. The advertisement insertion method according to claim 6, wherein after the sending an advertisement to the terminal by using the transmission resource, the method further comprises:
after the video call is connected, receiving a control instruction sent by the call control device, and stopping, according to the control instruction, sending the advertisement to the terminal; or
after the video call is connected, receiving a control instruction sent by the call control device, and stopping, according to the control instruction, sending a voice part in the advertisement to the terminal; and
after the video call is disconnected, receiving a control instruction sent by the call control device, and stopping, according to the control instruction, sending all parts of the advertisement to the terminal.

8. The advertisement insertion method according to claim 6 or 7, wherein before the sending an advertisement to the terminal by using the transmission resource, the method further comprises:
acquiring the advertisement from an advertisement storage, wherein the advertisement is a text, a voice, an image, or a video.

9. The advertisement insertion method according to claim 8, wherein when the advertisement is in a text, a voice, or an image format, after the acquiring the advertisement from an advertisement storage, and before the sending an advertisement to the terminal by using the transmission resource, the method further comprises:
converting the advertisement to a video format that conforms to a requirement of the transmission resource.

10. The advertisement insertion method according to any one of claims 6 to 9, wherein when the advertisement comprises a voice part, after the sending an advertisement to the terminal by using the allocated transmission resource, the method further comprises:
receiving ringing data, but not sending the ringing data to the terminal.

11. An advertisement insertion method, comprising:
receiving a call request sent by a calling side terminal, or sending a call request to a called side terminal; and
after the call is connected, sending, to an advertisement storage, a first instruction that carries identification information of the terminal, so as to instruct the advertisement storage to send an advertisement to the terminal according to the identification information.

12. The advertisement insertion method according to claim 11, wherein after the sending, to an advertisement storage, a first instruction that carries identification information of the terminal, the method further comprises:
after the call is connected, sending, to the advertisement storage, a second instruction for stopping sending the advertisement to the terminal, so as to stop the advertisement; or
after the call is connected, sending, to the advertisement storage, a second instruction for stopping sending a voice part in the advertisement to the terminal, so as to stop the voice part in the advertisement; and
after the call is disconnected, sending, to the advertisement storage, a second instruction for stopping sending all parts of the advertisement to the terminal, so as to stop all the parts of the advertisement.

13. An advertisement insertion method, comprising:
sending a call request to a call control device, or receiving a call request sent by a call control device; and
before the call is connected, playing an advertisement that is in advance acquired from an advertisement storage and stored in a terminal, or acquiring an advertisement from the advertisement storage and playing the advertisement in real time.

14. The advertisement insertion method according to claim 13, wherein the playing an advertisement that is in advance acquired from an advertisement storage and stored in a terminal comprises:
sending, to the advertisement storage, a first instruction that carries identification information of the terminal, so that the advertisement storage sends an advertisement to the terminal;
receiving the advertisement sent, according to the identification information, by the advertisement storage, and storing the advertisement; and
before the call is connected, playing the stored advertisement.

15. The advertisement insertion method according to claim 14, wherein after the before the call is connected, playing the stored advertisement, the method further comprises:
after the call is connected, stopping playing the advertisement; or
after the call is connected, stopping playing a voice part in the advertisement; and
after the call is disconnected, stopping playing all parts of the advertisement.

16. The advertisement insertion method according to claim 13, wherein the before the call is connected, acquiring an advertisement from the advertisement storage and playing the advertisement in real time comprises:
before the call is connected, sending, to the advertisement storage, a first instruction that carries identification information of a terminal, so that the advertisement storage sends an advertisement to the terminal;
receiving the advertisement sent by the advertisement storage; and
playing the received advertisement in real time.

17. The advertisement insertion method according to claim 16, wherein after the playing the received advertisement in real time, the method further comprises:
after the call is connected, sending, to the advertisement storage, a second instruction for stopping sending the advertisement to the terminal, so as to stop the advertisement; or
after the call is connected, sending, to the advertisement storage, a second instruction for stopping sending a voice part in the advertisement to the terminal, so as to stop the voice part in the advertisement; and
after the call is disconnected, sending, to the advertisement storage, a second instruction for stopping sending all parts of the advertisement to the terminal, so as to stop all the parts of the advertisement.

18. An advertisement insertion method, comprising:
receiving a first instruction sent by a call control device or a terminal, wherein the first instruction is an instruction that carries identification information of the terminal and is sent by the call control device or the terminal after the call control device or the terminal sends or receives a call request involving the terminal and before the call is connected; and
sending an advertisement to the terminal according to the identification information.

19. The advertisement insertion method according to claim 18, wherein before the sending an advertisement to the terminal according to the identification information, the method further comprises:
receiving placement requirement information which is of each advertisement and is sent by an advertisement policy and charging control function, wherein the placement requirement information comprises a placement time segment and a placement area; and
the sending an advertisement to the terminal according to the identification information specifically comprises:
querying for an advertisement that conforms to the placement requirement information, wherein the conforming to the placement requirement information comprises that current time conforms to time indicated by the placement time segment, and/or an area where the terminal is located conforms to the placement area, wherein the area where the terminal is located is determined according to the identification information of the terminal; and
sending, according to the identification information, to the terminal, the advertisement obtained through querying that conforms to the placement requirement information.

20. The advertisement insertion method according to claim 18 or 19, wherein after the sending an advertisement to the terminal according to the identification information, the method further comprises:
receiving a second instruction sent by the call control device or the terminal after the call is connected; and
stopping, according to the second instruction, sending the advertisement or a voice part in the advertisement to the terminal.

21. A terminal, comprising:
a request receiving module, configured to receive a call request from a user, wherein the call request is a voice call request or a video call request;
a request converting module, configured to, when the call request received by the request receiving module is the voice call request, convert the voice call request into a video call request;
a request sending module, configured to send, to a call control device, the video call request received by the request receiving module or converted by the request converting module, so that the call control device instructs a media gateway to allocate a transmission resource for the video call; and
an advertisement playing module, configured to, before a video call corresponding to the video call request sent by the request sending module is connected, receive an advertisement by using the transmission resource and play the advertisement.

22. The terminal according to claim 21, wherein the terminal further comprises:
a call switching module, configured to, when the video call request sent by the request sending module to the call control device is the video call request converted by the request converting module from the voice call request, after the video call corresponding to the video call request sent by the request sending module is connected, switch the video call to a voice call.

23. A call control device, comprising:
a request processing module, configured to receive a video call request sent by a calling side terminal, or send a video call request to a called side terminal; and
an instruction sending module, configured to send a resource allocation instruction to a media gateway, so that the media gateway allocates, according to the resource allocation instruction, a transmission resource for a video call corresponding to the video call request received or sent by the request processing module, and before the video call is connected, send an advertisement to the terminal by using the transmission resource, wherein
the video call request is a common video call request, or a video call request converted from a voice call request.

24. The call control device according to claim 23, wherein if the video call request received or sent by the request processing module is the video call request converted from the voice call request, the call control device further comprises:
a control instruction module, configured to, after the video call corresponding to the video call request received or sent by the request processing module is connected, send, to the terminal, a control instruction for switching the video call to a voice call, so as to stop the advertisement; or
after the video call is connected, send, to the media gateway, a control instruction for stopping sending a voice part in the advertisement to the terminal, so as to stop the voice part in the advertisement; and
after the video call is disconnected, send, to the media gateway, a control instruction for stopping sending the advertisement to the terminal, so as to stop all parts of the advertisement.

25. The call control device according to claim 23, wherein if the video call request received or sent by the request processing module is the common video call request, the call control device further comprises:
a stop instruction module, configured to, after the video call corresponding to the video call request received or sent by the request processing module is connected, send, to the media gateway, a control instruction for stopping sending the advertisement to the terminal, so as to stop the advertisement.

26. A media gateway, comprising:
an instruction receiving module, configured to receive a resource allocation instruction sent by a call control device, wherein the resource allocation instruction is sent by the call control device after the call control device receives a video call request sent by a calling side terminal, or sends a video call request to a called side terminal; and
an advertisement sending module, configured to allocate a transmission resource for the video call according to the resource allocation instruction received by the instruction receiving module, and before the video call is connected, send an advertisement to the terminal by using the transmission resource, wherein
the video call request is a common video call request, or a video call request converted from a voice call request.

27. The media gateway according to claim 26, wherein the media gateway further comprises:
a sending stop module, configured to, after the video call is connected, receive a control instruction sent by the call control device, and stop, according to the control instruction, sending the advertisement to the terminal; or
after the video call is connected, receive a control instruction sent by the call control device, and stop, according to the control instruction, sending a voice part in the advertisement to the terminal; and
after the video call is disconnected, receive a control instruction sent by the call control device, and stop, according to the control instruction, sending all parts of the advertisement to the terminal.

28. The media gateway according to claim 26 or 27, wherein the media gateway further comprises:
an advertisement acquiring module, configured to acquire, from an advertisement storage, the advertisement sent by the advertisement sending module, wherein the advertisement is a text, a voice, an image, or a video.

29. The media gateway according to claim 28, wherein the advertisement acquired by the advertisement acquiring module is in a text, a voice, or an image format, and the media gateway further comprises:
a video converting module, configured to convert the advertisement acquired by the advertisement acquiring module to a video format that conforms to a requirement of the transmission resource.

30. The media gateway according to any one of claims 26 to 29, wherein the advertisement sent by the advertisement sending module comprises a voice part, and the media gateway further comprises:
a ringing processing module, configured to receive ringing data, but not send the ringing data to the terminal.

31. A call control device, comprising:
a request processing module, configured to receive a call request sent by a calling side terminal, or send a call request to a called side terminal; and
a first instruction sending module, configured to, before a call corresponding to the call request received or sent by the request processing module is connected, send, to an advertisement storage, a first instruction that carries identification information of the terminal, so as to instruct the advertisement storage to send an advertisement to the terminal according to the identification information.

32. The call control device according to claim 31, wherein the call control device further comprises:
a second instruction sending module, configured to, after the call corresponding to the call request received or sent by the request processing module is connected, send, to the advertisement storage, a second instruction for stopping sending the advertisement to the terminal, so as to stop the advertisement; or
after the call is connected, send, to the advertisement storage, a second instruction for stopping sending a voice part in the advertisement to the terminal, so as to stop the voice part in the advertisement; and
after the call is disconnected, send, to the advertisement storage, a second instruction for stopping sending all parts of the advertisement to the terminal, so as to stop all the parts of the advertisement.

33. A terminal, comprising:
a call processing module, configured to send a call request to a call control device, or receive a call request sent by a call control device; and
an advertisement playing module, configured to, before a call corresponding to the call request received or sent by the call processing module is connected, play an advertisement that is in advance acquired from an advertisement storage and stored in the terminal, or acquire an advertisement from the advertisement storage and play the advertisement in real time.

34. The terminal according to claim 33, wherein the advertisement playing module comprises:
a first instruction sending unit, configured to, before the call is connected, send, to the advertisement storage, a first instruction that carries identification information of the terminal, so that the advertisement storage sends an advertisement to the terminal;
an advertisement storage unit, configured to: receive the advertisement, which is sent by the advertisement storage according to the identification information sent by the first instruction sending unit, and store the advertisement; and
an offline playing unit, configured to, before the call is connected, play the advertisement stored by the advertisement storage unit.

35. The terminal according to claim 34, wherein the terminal further comprises:
a play stop module, configured to, after the call is connected, stop playing the advertisement stored by the advertisement storage unit; or
after the call is connected, stop playing a voice part in the advertisement stored by the advertisement storage unit; and
after the call is disconnected, stop playing all parts of the advertisement.

36. The terminal according to claim 33, wherein the advertisement playing module comprises:
a first instruction sending unit, configured to, before the call is connected, send, to the advertisement storage, a first instruction that carries identification information of the terminal, so that the advertisement storage sends an advertisement to the terminal;
an advertisement receiving unit, configured to receive the advertisement, which is sent by the advertisement storage according to the identification information sent by the first instruction; and
a real-time playing unit, configured to play in real time the advertisement received by the advertisement receiving unit.

37. The terminal according to claim 36, wherein the terminal further comprises:
a stop instruction module, configured to, after the call is connected, send, to the advertisement storage, a second instruction for stopping sending the advertisement to the terminal, so as to stop the advertisement; or
after the call is connected, send, to the advertisement storage, a second instruction for stopping sending a voice part in the advertisement to the terminal, so as to stop the voice part in the advertisement; and
after the video call is disconnected, send, to the advertisement storage, a second instruction for stopping sending all parts of the advertisement in the terminal, so as to stop all the parts of the advertisement.

38. An advertisement storage, comprising:
a first instruction receiving module, configured to receive a first instruction sent by a call control device or a terminal, wherein the first instruction is an instruction that carries identification information of the terminal and is sent by the call control device or the terminal after the call control device or the terminal sends or receives a call request involving the terminal and before the call is connected; and
an advertisement sending module, configured to send an advertisement to the terminal according to the identification information received by the first instruction receiving module.

39. The advertisement storage according to claim 38, wherein the advertisement storage further comprises:
a requirement receiving module, configured to receive placement requirement information which is of each advertisement and is sent by an advertisement policy and charging control function, wherein the placement requirement information comprises a placement time segment and a placement area; and
the advertisement sending module specifically comprises:
an advertisement querying unit, configured to query for an advertisement that conforms to the placement requirement information received by the requirement receiving module, wherein the conforming to the placement requirement information comprises that current time conforms to time indicated by the placement time segment, and/or an area where the terminal is located conforms to the placement area, wherein the area where the terminal is located is determined according to the identification information of the terminal; and
an advertisement sending unit, configured to send, according to the identification information, to the terminal, the advertisement that is obtained through querying by the advertisement querying unit and conforms to the placement requirement information.

40. The advertisement storage according to claim 38 or 39, wherein the advertisement storage further comprises:
a second instruction receiving module, configured to receive a second instruction sent by the call control device or the terminal after the call is connected; and
a sending stop module, configured to stop, according to the second instruction received by the second instruction receiving module, sending the advertisement or a voice part in the advertisement to the terminal.

41. An advertisement insertion system, comprising the terminal according to claim 21 or 22, the call control device according to any one of claims 23 to 25, and the media gateway according to any one of claims 26 to 30.

42. An advertisement insertion system, comprising the call control device according to any one of claims 23 to 25, and the media gateway according to any one of claims 26 to 30.

43. An advertisement insertion system, comprising the call control device according to any one of claims 31 to 32, and the advertisement storage according to any one of claims 38 to 40.

44. An advertisement insertion system, comprising the terminal according to claim 34 or 35, and the advertisement storage according to claim 38 or 39.

45. An advertisement insertion system, comprising the terminal according to claim 36 or 37, and the advertisement storage according to any one of claims 38 to 40.
